(19)

Europäisches Patentamt

European Patent Office

Office européen des brevets

(11) **EP 4 177 826 A1**

(12) **EUROPEAN PATENT APPLICATION**

(43) Date of publication:
**10.05.2023 Bulletin 2023/19**

(21) Application number: **21206627.8**

(22) Date of filing: **05.11.2021**

(51) International Patent Classification (IPC):
**G06T 7/00** $^{(2017.01)}$ **G06T 11/00** $^{(2006.01)}$

(52) Cooperative Patent Classification (CPC):
**G06T 11/001; G06T 7/0012;** G06T 2207/10056;
G06T 2207/30024

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Technische Universität Dresden**
**01069 Dresden (DE)**

(72) Inventors:
 • **Ehrenhofer, Adrian**
 **01159 Dresden (DE)**
 • **Meinhardt, Matthias**
 **01705 Pesterwitz (DE)**
 • **Menning, Johannes**
 **99189 Witterda (DE)**
 • **Wallmersperger, Thomas**
 **01069 Dresden (DE)**
 • **Baretton, Gustavo**
 **01326 Dresden (DE)**

(74) Representative: **Hertin und Partner
Rechts- und Patentanwälte PartG mbB
Kurfürstendamm 54/55
10707 Berlin (DE)**

(54) **METHOD AND SYSTEM FOR SIMULATING AND PREDICTING HISTOLOGICAL STAINING OF A TISSUE SECTION**

(57)     The invention relates to a method for simulating and predicting a histological staining of a tissue section, comprising generating a geometric model of a tissue section, and modelling and simulating one or more dyes in said tissue section. The invention further relates to a system for simulating a histological staining of a tissue section, comprising a data store used to contain the material parameters and geometry parameters, software for analyzing tissue section images, generating a geometric model, generating a finite-element-mesh, and modelling and simulating the transport of a dye, wherein the software is configured for simulating a histological, histochemical or immunohistochemical staining of a tissue section. In another aspect, the invention relates to a method for diagnosing a disease, comprising preparing and analyzing one or more tissue sections of a tissue sample obtained from a subject, simulating the histological staining of the tissue section, and evaluating the simulation, for example by using a machine learning model that is trained on a data set that was obtained with a different staining procedure, wherein the simulation indicates the presence, grading or absence of a disease.

EP 4 177 826 A1

## Description

The present invention is in the field of histology, tissue section staining and virtual staining.

The invention relates to a method for simulating and predicting a histological staining of a tissue section, comprising generating a geometric model of a tissue section, and modelling and simulating one or more dyes in said tissue section.

The invention further relates to a system for simulating a histological staining of a tissue section, comprising a data store used to contain the material parameters and geometry parameters, software for analysing tissue section images, generating a geometric model, generating a finite-element-mesh, and modelling and simulating the transport of a dye, wherein the software is configured for simulating a histological, histochemical or immunohistochemical staining of a tissue section according to the method of any one of the preceding claims.

In another aspect, the invention relates to a method for diagnosing a disease, comprising preparing and analysing one or more tissue sections of a tissue sample obtained from a subject, simulating the histological staining of the tissue section, and evaluating the simulation, for example by using a machine learning model that is trained on a data set that was obtained with a different staining procedure, wherein the simulation indicates the presence, grading or absence of a disease.

## BACKGROUND OF THE INVENTION

Cancer is one of the leading causes of death worldwide today. In order to discover and treat cancer appropriately, it is necessary to examine the histological characteristics of the tumour cells. The two main ways to diagnose the presence of cancer and its characteristics, such as the degree of malignancy, are (i) to include the staining of histological sections and (ii) to use radiological methods, e.g. magnetic resonance imaging.

To create a histological slide, a biopsy of the respective tissue has to be carried out. This sample is processed in a sequence of steps. There are different kinds of histological sections, such as paraffin sections or frozen sections, which differ in the preparation steps. Two steps being common to all procedures of the classical lab routine are (i) the cutting and (ii) the staining of the tissue. The result is an e.g. micrometer thick sample, situated on a glass slide with typical values ranging from 1 $\mu$m to 10 $\mu$m. The thickness depends strongly on the processed tissue. The main reason for the need of staining is the fact, that without this, the components of the cells cannot easily be distinguished from each other under the light microscope. The goal of the staining is to create a visual distinction between the components of the tissue.

Typically, the cell nuclei and cytoplasm are stained with an appropriate dye. The most common issue stains for that purpose are hematoxylin (stains mainly the nuclei) and eosin (stains mainly the cytoplasm). For the diagnosis of tumors, it can be helpful to have a stain that creates a general overview, e.g. distinguish nuclei and cytoplasm, but also to know which specific proteins are present in the tissue via an immunohistochemical staining.

The simulation of staining histological slides represents an advancement and supportive approach to the routine work of pathologists. Through staining simulation, it is possible to visualize the predicted staining of different staining times with any given dye, or even visualize predicted staining using a different dye. Different staining methods have been combined with artificial intelligence to obtain an evaluation of samples, although many of these methods are not yet part of histological routines.

Hollon et al., Nature Medicine, January 2020, describe the intraoperative diagnosis of brain tumors using a label-free optical imaging technique and deep convolutional neural networks (CNN). A three-stage intraoperative tissue diagnosis pipeline, comprising: (1) image acquisition, (2) image processing, and (3) diagnostic prediction using CNN, has been described. The CNN was trained to classify the specimens into 13 histological categories. The authors concluded that the CNN learned specific histomorphological features for image classification, including features used by pathologists to diagnose cancer.

Orringer et al., Nature Biomedical engineering, February 2017, disclose an intraoperative histological analysis of an unprocessed tissue specimen using fiber laser-based stimulated Raman scattering (SRS) microscopy. The authors described a method for SRS image processing based on stimulated Raman histology (SRH) that simulates haematoxylin-and-eosin (HE) staining and reveals histologic features of brain tumors.

Furthermore, 3D reconstruction enables visualization of spatial relationships of developing systems and organs, and when extended to biomedicine can enable the observation of normal and abnormal tissues.

Pichat et al., Med Image Anal, May 2018, review the methods for 3D histology reconstruction from serial sections, used in the study of many different types of tissue. The authors summarize the process that produces digitized sections from a tissue specimen, several associated artefacts, and possible ways to minimize them. Also reviewed are methods for 3D histology reconstruction with and without the help of 3D medical imaging, along with methods of validation.

The above-mentioned the publications teach means for virtual HE staining using software and computer-implemented techniques. However, such virtual staining is limited by other factors, such as processing SRH images or requiring multiple sections to generate a 3D reconstruction. The above-mentioned techniques do not disclose simulated staining by creating and applying geometric modelling.

Winzek et al [13, 43] used a one-dimensional diffusion equation to describe the transport of a dye within a cell. The authors modeled the uptake of the dye by the tissue with an adsorption equation under the assumption that the concentration of the dye is constant. Other authors, such as Irion et al [42], modeled the staining of individual cell organelles of living cells.

Typically, only one kind of staining and only one staining time can be performed for a single histological sample. If the composition of the dye changes, the staining procedure must be adjusted and repeated until the sample meets the quality criteria of the pathologist. For further staining or a longer staining time another tissue section is typically required. As such, there is a significant need in the field of histological staining to provide means that enable multiple visualizations of a single sample (histological tissue section) using e.g. either alternative dyes or multiple staining times.

## SUMMARY OF THE INVENTION

In light of the prior art the technical problem underlying the present invention is to provide a method for simulating a histological staining of a tissue section.

This problem is solved by the features of the independent claims. Preferred embodiments of the present invention are provided by dependent claims.

The invention therefore relates to a method for simulating and predicting a histological staining of a tissue section comprising generating a geometric model of a tissue section and modelling and simulating the involved physical processes for one or more dyes in said tissue section.

As described in more detail below, in some embodiments of the invention, the transport and binding of a dye to the tissue section is modelled and numerically implemented so that the staining process can be predicted. This leads to several surprising advantages. A histological sample can be virtually stained or virtually re-stained by a different dye. In other words, a tissue section which was already stained with a dye could be virtually re-stained with a further dye which is different from the previous dye. Further, the degree of staining can be individually adjusted for evaluation by a pathologist which makes it easier to compare samples between different research or diagnostic centers. The histological analysis can be adapted to the personal habits/experiences of the histologist.

Moreover, the variety and volume of the training datasets for machine learning methods can be hugely increased through the simulation of a histological staining of a tissue section, because the image of the staining result can be standardized. Even improperly stained tissue sections can be corrected by a virtual re-staining and therefore qualified for entering into the dataset for the machine learning method. Moreover, improperly stained tissue sections can be corrected/re-stained for analysis by a machine learning model that is trained on a standardized dataset.

As described below, in embodiments, the present invention utilizes the mechanics of staining histological sections via building a simplified model and conducting numerical simulations using the model. The model used to describe the diffusion and reaction processes during the staining of histological sections is presented in the embodiments and examples below. This model preferably allows the determination of the resulting stain for each nucleus individually. However, it is important for a pathologist to look at a section of the entire tissue and not just individual nuclei. A workflow is therefore also presented to derive a two-dimensional representation of the geometry of the scanned histological slide. This geometry (geometric model) is then used to project the results of a finite element simulation of the staining process, which is employed to simulate staining with any given dye or for any given time. The two-dimensional geometric model thus allows (i) the identification of the local properties from an image of the section and (ii) the projection of the simulations results and interpretation of these results by pathologists or machine learning algorithms. As shown in the examples, the proposed model is compared to real histological sections which were created in clinical histology/pathology departments.

In one embodiment, the method as described herein comprises:

    a. obtaining at least one image of a tissue section,

    b. generating a geometric model of the image, wherein the geometric model preferably comprises:

        i. one or more locations of a nuclear region and/or cytoplasmic region of each cell, interstitial regions and empty regions in the image, and

        ii. a signal intensity of the nuclear regions and/or other regions, and

        iii. material parameters,

c. modelling and simulating the transport and binding of one or more dyes in the tissue section, comprising determining a simulated quantity of dye that binds to each nuclear region and/or other regions of the tissue section and

d. projecting color intensities ($I_R$ $I_G$ $I_B$) of each nuclear region and/or other regions of the geometric model, wherein the intensities ($I_R$ $I_G$ $I_B$) of each nuclear region and/or other regions are determined by an absorptive and/or reflective property of the dye, such as according to the Lamber-Beer law.

The advantage of the geometric model of the invention is to simplify and represent the structural or physical information of the section required for simulating a histological staining of a tissue section. In one embodiment, the geometric model provides one or more locations of a nuclear region of each cell, a signal intensity of the nuclear regions and material parameters. In a preferred embodiment, the geometric model provides one or more locations of a nuclear region and/or cytoplasmic region of each cell, more preferably interstitial regions and empty regions in the image.

In embodiments, the geometric model provides further locations of interstitial regions and empty regions in the image, and signal intensity of other regions.

In some embodiments, the method employs material parameters of the tissue section. These material parameters are then considered in the geometric model and enable a fine-tuning of any dye properties that are influential in determining staining, thus providing a more detailed virtual representation of the staining.

In one embodiment, the material parameters comprise one or more of staining time, tissue section thickness and/or type of preparation of tissue section, such as a frozen tissue section or paraffin embedded tissue section, a maximum value for dye binding to the tissue section, a concentration of a dye, and a maximum number of dye binding sites in the tissue section.

In a preferred embodiment, the material parameters comprise one or more of a coefficient of diffusion for the dye (e.g. D), a rate constant, such as a rate constant of a binding reaction ($k_{on}$) and/or a rate constant of a backward reaction ($k_{off}$), maximal dye concentration binding to the tissue $\left(c_b^{max}\right)$ dye concentration in the dye basin $\overline{(c_f)}$, an extinction coefficient for red, green and/or blue dye ($\varepsilon_R$, $\varepsilon_G$, $\varepsilon_B$), and/or an intensity of incident red, green and/or blue light ($I_R$ $I_G$ $I_B$). In a preferred embodiment, the thickness of the slides is set to the typical range thicknesses for histological slides, e.g. to h=6 $\mu$m.

The geometric model as used herein can be a two-dimensional (2D) or a three-dimensional (3D) geometric model, preferably a 2D geometric model. It is advantageous that the geometric model is simplified to 2D because the projection to a computer image is readable by pathologists and interpretable by machine learning methods that are trained on tissue sections.

In one embodiment, the geometric model comprises one or more geometry parameters. Said geometry parameters are preferably sample specific and may comprise, without limitation, nuclear, and/or other regions, preferably nuclear regions, cytoplasmatic regions, interstitial regions and empty regions, more preferably the nucleus. Geometry parameters may be considered as any information used in or to generate a geometric model.

In a preferred embodiment, once the dye has moved to the binding sites, due to an (electro-)chemical reaction, it forms a chemical bond with the respective tissue. The binding of the dye to the tissue is in some embodiments a reversible reaction. Therefore, the binding of the dye can be represented as a pseudochemical reaction

$$A + B \leftrightarrow C \qquad\qquad (4.13)$$

where A is the free, unbound dye concentration, B the tissue with which the dye can form a bond and C is the dye which is bound to the tissue.

In some embodiments, the staining is considered to be a two-step process. The first step is the diffusion of the dye into the section and the second step is the binding of the dye to the tissue.

In other embodiments, the diffusion and binding process is modelled and simulated only in the height direction. This is done for every point in the two-dimensional geometry model according to the identified local material parameters.

In embodiments, for the simulation of both steps, a diffusion-reaction equation in height direction of the histological slide and a reaction equation are fully coupled to form the resulting system of equations.

$$\frac{\partial c_f}{\partial t} = D\nabla^2 c_f - k_{on} c_f \left(c_b^{max} - c_b\right) + k_{off}\, c_b$$
$$\frac{\partial c_b}{\partial t} = k_{on} c_f (c_b^{max} - c_b) - k_{off} c_b \qquad\qquad (4.24)$$

The used material parameters are the diffusion coefficient D, the rate constant which determines the binding rate $k_{on}$, the rate constant which determines the dye release rate $k_{off}$ and the maximal concentration of dye $c_b^{max}$ at the respective part of the cell, preferably the nucleus, can bind.

The general variables in the equation 4.13 can be defined with the used variables

$$c_f + (c_b^{max} - c_b) \rightleftharpoons c_b. \qquad (4)$$

Equation 4 is not an exact chemical formula; it is only used for better representation. The unknown functions in equations (4.24) are the concentration of the unbound dye $c_f$ and the concentration of the bound dye $c_b$.

In one embodiment, the model for representing the resulting color of a histological slide illuminated with white light, is an RGB model, which is an additive color model. The three intensities red (R), green (G) and blue (B) span a vector space whose axes are the three intensities. The values range between 0 to 1 or from 0 to 255. The latter is preferred. A combination of (0,0,0) represents the color black and if each intensity is maximal, i.e. 255, the color white is represented. This means, the lower the intensities, the darker the color is.

In some embodiments, the resulting color intensities of each nuclear region and/or other region of the geometric model is determined by

$$I(\lambda) = I_0(\lambda) \exp(-\varepsilon(\lambda)\, c_b\, h) \qquad (4.25)$$

This equation links the intensity of the light of a certain wavelength $\lambda$ after passing the slide $I$ with the concentration of the bound dye $c_b$ via the extinction coefficient $\varepsilon$, the thickness of the slide h and the intensity of the light before it enters the specimen $I_0$.

The extinction coefficient $\varepsilon$ is a material parameter of the dye. It determines which wavelengths $\lambda$ of the light are absorbed by the dye and are thus no longer present in the light leaving the slide. The intensities $I$ and $I_0$ as well as the extinction coefficient $\varepsilon$ are dependent on the wavelength $\lambda$.

Following the equation 4.25, the color intensity is presented by three color intensities red (R), green (G) and blue (B), the equations 4.27-4.29 can be used to calculate the intensities $I_R$ $I_G$ $I_B$ required to derive a resulting color. The extinction coefficient $\varepsilon$ can be determined independently by experimental investigations or taken from the literature or be calculated from data of stained slides which have been employed in the present work.

$$I_R = I_{0,R} \exp(-\varepsilon_R\, c_b\, h) \qquad (4.27)$$

$$I_G = I_{0,G} \exp(-\varepsilon_G\, c_b\, h) \qquad (4.28)$$

$$I_B = I_{0,B} \exp(-\varepsilon_B\, c_b\, h) \qquad (4.29)$$

In other embodiments, if the dye does not reflect/absorb light, a suitable equation which links the resulting color of the concentration of the dye which binds to the tissue section is applied.

In some embodiments, at least the type of dye, staining time and thickness of the tissue section are recorded, and preferably the material parameters are calibrated with the at least one image of the tissue section.

In a preferred embodiment, the at least one image of the tissue section (step a) is selected from an image of the section without staining, or an image of the section obtained after staining with a dye, or a first image of the section obtained after staining with a dye at a first time point and a second image obtained after staining with the same dye at a later second time point. A first time point can be, without limitation, 0s and between 0s and 200s after the beginning of the staining with a dye, i.e. the immersion of the sample in a dye bath. A second time point can be, without limitation, between 0s and 600s after staining with a dye.

In one embodiment, the geometric model comprises a finite element mesh generated from an image of the tissue section. The mesh is used to record the projected simulation results to create a two-dimensional image.

In a preferred embodiment, generating a finite element mesh comprises a) generating a binary mask of the image of the tissue section, wherein nuclear, and/or other regions are distinguishable, preferably wherein nuclear regions, cytoplasmatic regions, interstitial regions and empty regions are distinguishable; b) generating a geometric model based on the mask; and c) generating a finite-element or finite-volume mesh for the geometric model.

In a more preferred embodiment, a nucleus is depicted and approximated by multiple finite elements.

In some embodiments, the modelling and simulating of a dye comprises simulating transport of a dye from dye basin to tissue section or cell, or one or more of interstitial dye diffusion within the tissue section, dye diffusion across a cell membrane, intracytoplasmatic dye diffusion, from a cytoplasm to a nucleus, dye diffusion through a nucleus and/or dye diffusion to a binding site within the nucleus and/or other regions, wherein these steps are not modelled individually rather as one process.

In a preferred embodiment, the modelling and simulating of a dye comprises one or more of modelling interstitial dye diffusion within the tissue section, dye diffusion across a cell membrane, intracytoplasmatic dye diffusion, from a cytoplasm to a nucleus, dye diffusion through a nucleus and/or dye diffusion to a binding site within the nucleus and/or other regions but excludes the step of simulating transport of a dye from a dye basin to a tissue section or cell.

The tissue sections are mounted vertically in the basket. The up and down movement of the basket carrying the tissue slides therefore leads to a shear flow, in which the fluid and with it the dye molecules flow parallel to the section. Consequently, there is no convective flow perpendicular to the section and thus no convective mass cotransport of the dye molecules from the dye solution into the section. Due to the mixing, the concentration of dye at the section is typically constant, as a boundary condition. As another consequence of the mixing, the diffusion of the dye molecules in the basin outside of the tissue section can be spared or removed from the analysis.

In a more preferred embodiment, the modelling and simulating comprises further simulating binding of a dye to the tissue.

In one embodiment, the modelling of a dye comprises a diffusion-reaction equation and a reaction equation, wherein the diffusion-reaction equation and a reaction equation are coupled.

In a preferred embodiment, the diffusion-reaction equation and a reaction equation are coupled as an equation system

$$\frac{\partial c_{\mathrm{f}}}{\partial t} = D\nabla^2 c_{\mathrm{f}} - k_{\mathrm{on}} c_{\mathrm{f}} \left( c_{\mathrm{b}}^{\mathrm{max}} - c_{\mathrm{b}} \right) + k_{\mathrm{off}} c_{\mathrm{b}}$$
$$\frac{\partial c_{\mathrm{b}}}{\partial t} = k_{\mathrm{on}} c_{\mathrm{f}} (c_{\mathrm{b}}^{\mathrm{max}} - c_{\mathrm{b}}) - k_{\mathrm{off}} c_{\mathrm{b}} \tag{4.24}$$

The used material parameters are the diffusion coefficient D, the rate constant which determines the binding rate $k_{on}$, the rate constant which determines the dye release rate $k_{off}$ and the maximal concentration of dye $c_b^{max}$ at the respective part of the cell, preferably the nucleus, can bind.

The general variables in the equation 4.13 can be defined with the used variables

$$c_{\mathrm{f}} + (c_{\mathrm{b}}^{\mathrm{max}} - c_{\mathrm{b}}) \rightleftharpoons c_{\mathrm{b}}. \tag{4}$$

As mentioned, equation 4 is not an exact chemical formula; it is only employed for improved representation. The unknown functions in equations (4.24) are the concentration of the unbound dye $c_f$ and the concentration of the bound dye $c_b$.

In a preferred embodiment, the modelling of a dye comprises further equations for absorption and/or reflection and/or emission of light, such as visible light. Lambert-Beer's Law is preferred for modelling a dye which absorbs light.

In some embodiment, the modelling of a dye is numerically implemented with a simulation method, such as finite element method (FEM), finite difference method (FDM) and/or finite volume method (FVM).

In a preferred embodiment, the finite-element simulation is done only in height direction.

In a preferred embodiment, the numerical implementation of the modelling of a dye comprises generalization of the diffusion-reaction equation and the reaction equation, determination of the material parameters and a time discretization of the mass balance law of a concentration of free dye, and a concentration of dye which binds to the tissue, wherein preferably the time discretization is applied with a finite-difference-method, wherein each time step is calculated successively.

In a more preferred embodiment, the finite element method is used to discretize and solve the coupled reaction-diffusion equation and reaction equation (4.24).

The required weak formulations are

$$\int_{\Omega} \dot{c}_{\mathrm{f}}\, \delta c_{\mathrm{f}}\, \mathrm{d}V = \int_{\partial\Omega} \mathbf{n} \cdot (D\nabla c_{\mathrm{f}}\, \delta c_{\mathrm{f}})\, \mathrm{d}A - \int_{\Omega} D\nabla c_{\mathrm{f}} \cdot \nabla \delta c_{\mathrm{f}}\, \mathrm{d}V$$
$$- \int_{\Omega} k_{\mathrm{on}} c_{\mathrm{f}}(c_{\mathrm{b}}^{\max} - c_{\mathrm{b}})\, \delta c_{\mathrm{f}}\, \mathrm{d}V + \int_{\Omega} k_{\mathrm{off}}\, c_{\mathrm{b}}\, \delta c_{\mathrm{f}}\, \mathrm{d}V \qquad (5.4)$$

$$\int_{\Omega} \dot{c}_{\mathrm{b}}\, \delta c_{\mathrm{b}}\, \mathrm{d}V = \int_{\Omega} k_{\mathrm{on}} c_{\mathrm{f}}(c_{\mathrm{b}}^{\max} - c_{\mathrm{b}})\, \delta c_{\mathrm{b}}\, \mathrm{d}V - \int_{\Omega} k_{\mathrm{off}}\, c_{\mathrm{b}}\, \delta c_{\mathrm{b}}\, \mathrm{d}V. \qquad (5.5)$$

The weak formulations are multiplied with two weighting functions $\delta_{c_f}$ and $\delta_{c_b}$ and the integrals over the area A and volume V. n represents the normal vector at the boundary in outwards direction. The dimensions of a histological section are e.g. 20 mm $\times$15 mm in a plane and a few micrometers, e.g. 6 $\mu$m. Due to strong contrasts in dimensions, diffusion over height, i.e. z axis, is much faster than in the xy-plane. Therefore, the assumption was made that diffusion in the xy-plane can be spared. Thus, the problem is considered to be one-dimensional in z-direction and a one-dimensional finite element mesh is applied.

In another preferred embodiment, finite difference method is used for time discretization, preferably backward Euler finite difference method:

$$\dot{c}_{\mathrm{f}} \approx \frac{c_{\mathrm{f}}^{n+1} - c_{\mathrm{f}}^{n}}{\triangle t} \quad ; \quad \dot{c}_{\mathrm{b}} \approx \frac{c_{\mathrm{b}}^{n+1} - c_{\mathrm{b}}^{n}}{\triangle t}. \qquad (5.18)$$

wherein n is the actual point in time and $t$ is the time. The used time step size is e.g. $t_{n+1}$- $t_n$=0.5 s.

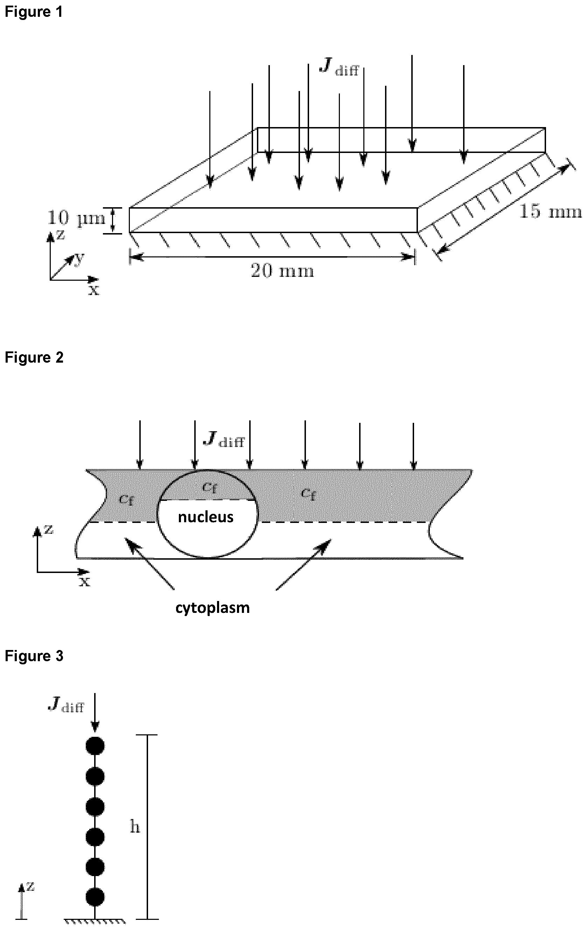

In embodiments, the simulation starts right before the tissue sections are placed into the dye basin. Hence the concentration of the free and of the bound dye are both equal to zero at t=0, i.e. $c_f$ (z, t=0)=0 and $c_b$ (z, t=0)=0. At the top where the tissue is in contact with the dye solution, a constant concentration of the free, unbound dye is prescribed, $c_f$ (z=6 $\mu$m, t)= $\overline{c_f}$ with $\overline{c_f}$ being the concentration of the dye used in the respective recipe. At the bottom, due to the restricting glass slide, the diffusion flux is set to zero, i.e. $J_{diff}$(z=0 $\mu$m, t) = 0. The two boundary conditions are visualized in Figure 1 and Figure 3. For the bound dye concentration $c_b$, no boundary condition is necessary.

Another aspect of the present invention refers to a system for simulating a histological staining of a tissue section, comprising:

a. a data store used to contain the material parameters and geometry parameters,

b. software for analyzing tissue section images, generating a geometric model, generating a finite-element-mesh, and modelling and simulating the transport of a dye,

c. wherein the software is configured for simulating a histological, histochemical or immunohistochemical staining of a tissue section according to the method as used herein including any disclosed embodiments.

In one embodiment, geometry parameters are sample specific and comprise nuclear, and/or other regions, preferably nuclear regions, cytoplasmatic regions, interstitial regions and empty regions, more preferably the nucleus. Geometry parameters may be considered any of the information described in the context of or used to generate the geometric model, as described in detail above.

A further aspect of the present invention refers to a method for diagnosing a disease, comprising:

a. preparing and analyzing one or more tissue sections of a tissue sample obtained from a subject,

b. simulating the histological staining of the tissue section according to the method or the system as used herein, and

c. evaluating the simulation, for example by using a machine learning model that is trained on a data set that was obtained with a different staining procedure, wherein the simulation indicates the presence, grading or absence of a disease.

The various aspects of the invention are unified by, benefit from, are based on and/or are linked by the common and surprising finding of a method for simulating a histological staining of a tissue section, comprising generating a geometric model of a tissue section and modelling and simulating one or more dyes in said tissue section. Any features described in the context of the method apply to the system and vice versa. A skilled person is aware of the necessary steps to implement the various features of the method into a corresponding system, and vice versa.

## DETAILED DESCRIPTION OF THE INVENTION

All cited documents of the patent and non-patent literature are hereby incorporated by reference in their entirety. Each term described below is to be given its common meaning as understood by a skilled person. The definitions are provided below by way of example to further illustrate how each term is applied in the context of the invention, and may be employed in preferred embodiments of the invention.

*Background on Histology and Histopathology*

Pathology, histopathology or histology aim to study the manifestation of disease by microscopic examination of tissue morphology. In pathology, the sample to be examined under the microscope usually is the result of a surgery, biopsy or autopsy after fixation, clearing/embedding, sectioning and staining of the tissue specimen. Alternatively, frozen section processing with a cryostat is done when rapid results are required or fixation would be detrimental to target structures. The tissue sections after fixation and wax embedding are typically cut into 1-10, preferably 2-8 micron thin slices with a microtome before staining and transfer to a glass slide for examination with a light microscope. Typical specimens in pathology are, without limitation, colon, kidney, pancreas, cervix, lung, breast, prostate, or connective tissue.
Histology slide preparation typically begins with fixation of the tissue specimen, to prevent tissue autolysis and putrefaction. Biological tissue samples are often transferred into fixative immediately after collection, usually in 10% neutral buffered formalin for 24 to 48 hours.
The first step of processing is dehydration, which involves immersing a specimen in increasing concentrations of alcohol to remove the water and formalin from the tissue. Clearing is the next step, in which an organic solvent such as xylene is used to remove the alcohol and allow infiltration with paraffin wax. Embedding is the final step, where specimens are infiltrated with the embedding agent - usually paraffin wax which provides a support matrix that allows for very thin sectioning. A microtome is used to slice extremely thin tissue sections off the block in the form of a ribbon, following histological or histochemical staining (typically haematoxylin and eosin - "HE stain") to provide contrast to tissue sections.
Microscope Requirements: A very good differentiation of tissue structures and clearly visible cellular details are prerequisites in pathology for carcinoma and tumor cell diagnosis or diagnosis of other diseases. Histopathologists rely on clear images of their samples with high color fidelity in brightfield. Other contrasting techniques include polarization, CISH, fluorescence, immunofluorescence, or FISH microscopy, immunohistochemistry and histochemistry, and may also be used in the present invention.
While histological and immunohistochemical stains result in a good transparency of the sample and specific staining of cellular features, the optical quality of the microscope and the fidelity of the attached camera for digital documentation can be selected and/or adjusted by a skilled person as needed. Automated digital slide scanning systems may assist with high-throughput screening and archiving, and are also intended as aspects of the present invention.

*Definitions:*

The term "tissue section" as used herein shall mean a slice of a sectioned tissue, which has been preferably preserved as paraffin embedded, or is preferably frozen tissue. The thickness or height of a tissue section ranges from 0 $\mu$m to 20 $\mu$m, preferably 1 $\mu$m to 10 $\mu$m, more preferably about 6 $\mu$m. The term tissue section as used in the present invention refers also to a histological section.
The term "histological slide" refers to a microscope slide prepared by providing a tissue section on one side of the slide. In some embodiments, it also refers to the tissue section immobilized on the glass slide. In some embodiments, a cover slide/slip is added to protect the sample.
The term "image of a histological slide" refers to a single image of a part or whole of a histological slide or a tissue section or a part of a tissue section after mounting on a slide. The "analysis of a tissue section", and "analysis of a histological slide", may be understood and used interchangeably.
The term "histological staining" refers to the use of histochemical dyes for treating tissue sections (preferably paraffin embedded or frozen) to stain structural features of the tissue, as well as to enhance tissue contrast between structural features. In the context of present invention, the terms histological staining and histochemical staining are used interchangeably.

The term "paraffin embedded tissue section" refers to a section of tissue embedded into paraffin blocks which support the tissue structure and enables very thin sections to be cut and mounted onto microscope slides for analysis.

The term "frozen tissue section" refers to a section of tissue that has been rapidly cooled using a cryostat. Frozen tissue sections are often employed in hospitals to assist with the diagnoses of lesions and the extent of the lesion during surgery.

The term "cell nucleus" refers to the membrane-bound organelle found in eukaryotic cells containing the genome. The term "nuclear region of a cell" in a eukaryotic cell refers to a region of or within the nucleus.

In some embodiments, the nuclear region represents in essence the entire nucleus, and when observed via staining may be considered the region surrounded by the nuclear membrane. In other embodiments a nuclear region may be a region within the nucleus, for example when using immunohistochemical staining, that focuses on sub-nuclear regions of the nucleus. In preferred embodiments, the position of a "nucleus of a cell" is determined as the middle point of a nucleus of a cell.

The term "signal intensity" refers to the strength of the measurable output signal which reflects the concentration of dye binding to any region of a tissue section, for example a cytoplasmic region of a cell, a nuclear region of a cell, interstitial region or empty region. "Signal intensity" includes but is not limited to color intensity or staining intensity. The term "color intensity" refers to a form of signal intensity. In some embodiments, the color intensity presents as an intensity of incident red, green and/or blue light. Signal intensity and color intensity may in some embodiments be considered as a "staining intensity".

The term "cytoplasmic region of a cell" refers to a non-nuclear region of a cell, for example between nucleus and cell membrane, typically containing the organelles.

The term "interstitial region" refers to a region between multiple cells.

The term "empty region" refers to an essentially enclosed compartment inside or outside of a cell, which is filled e.g. with water containing inorganic and/or organic molecules. An empty region can also be comprised within the cytoplasmic region and can be present as an unstained region in the image of a histological staining of a tissue section.

The term "other region" refers to any region, e.g. a cytoplasmic region of a cell and/or interstitial region and/or empty region in the cell.

The term "geometry parameter" refers to sample-specific parameters relating to geometry of the sample, for example the parameters used in the geometric model. For example, the geometry parameters may comprise one or more locations of a nuclear region and/or cytoplasmic region of a cell, interstitial regions and/or empty regions in the image. The geometric parameters may comprise a nucleus of the cell, or middle point of a nuclear region.

The term "material parameter" refers to a parameter used to describe any physical aspect of a tissue section (or part thereof) or staining a tissue section. For example, material parameters are used in embodiments for the comparison and validation of the model proposed with experimental data. The material parameter may, by way of example, comprise one or more of staining time, tissue section thickness and/or type of preparation of tissue section, such as a frozen tissue section or paraffin embedded tissue section, a maximum value for dye binding to the tissue section, a concentration of a dye, and a maximum number of dye binding sites in the tissue section.

In some embodiments, one or more material parameters are determined under the assumption that the height of the section is equal to 6 $\mu$m.

Example material parameters are shown in table 1 below (these may be considered as embodiments of the invention individually, or in any given combination, with or without limitation to the specific values presented in the table).

Table 1:

| Parameter | Symbol | Value | Unit |
|---|---|---|---|
| Rate constant of a binding reaction | $k_{on}$ | 0.34...2.52 | $M^3 mol^{-1} s^{-1}$ |
| Rate constant of a backward reaction | $k_{off}$ | 0.013 | $s^{-1}$ |
| Coefficient of diffusion | D | $4.53 \cdot 10^{-12}$ | $m^2 s^{-1}$ |
| Value for maximum dye binding to the tissue | $c_b^{max}$ | 50...376 | $mol\ m^{-3}$ |
| Dye concentration in the solution | $c_{Haema}$ | 10,67 | $mol\ m^{-3}$ |
| Extinction coefficient hemalaun red | $\varepsilon_R$ | 1585 | $m^2\ mol^{-1}$ |
| Extinction coefficient hemalaun green | $\varepsilon_G$ | 2996 | $m^2\ mol^{-1}$ |
| Extinction coefficient hemalaun blue | $\varepsilon_B$ | 111 | $m^2\ mol^{-1}$ |
| Intensity of incident light red | $I_{0,R}$ | 255 | $W\ m^{-2}$ |
| Intensity of incident light green | $I_{0,G}$ | 255 | $W\ m^{-2}$ |

(continued)

| Parameter | Symbol | Value | Unit |
|---|---|---|---|
| Intensity of incident light blue | $I_{0,B}$ | 255 | W m$^{-2}$ |

In embodiments, the material parameters include one or more of a coefficient of diffusion for the dye, a rate constant, such as a rate constant of a binding reaction and/or a rate constant of a backward reaction, an extinction coefficient for red, green and/or blue dye, and/or an intensity of incident red, green and/or blue light. In preferred embodiments, the material parameters are calibrated with at least one image of the tissue section, wherein at least one image of the tissue section is selected from an image of the section obtained after staining with a dye, or a first image of the section obtained after staining with a dye at a first time point and a second image obtained after staining with the same dye at a later second time point.

In a preferred embodiment, white light passing through the slide, $I_{0,i}$ with i= R, G, B can be set to $I_{0,i}$ = 255 and hemalum is used as dye. The height of the slides is set to $h$ = 6 $\mu$m. A combination of Merck's Mayer's hemalum and SAV's Mayer's hemalum with a mixing ratio of 1:2 in favor of SAV's hemalum recipe is used to stain the slides. The hematin and the mordant form a bond in a ratio of 1:1. Therefore, the concentration of the hematin and the same amount of the mordant are summed. This is carried out for the recipe of Merck and SAV. From the calculated values the weighted average is taken. The result is referred to as $\overline{c_f}$.

The term "dye" shall mean a compound that is capable of binding to a substrate and staining it, preferably on the basis of its chromophore groups, cf. [5] [9] S. 162. Chromophores refers to groups of atoms that have the property of absorbing, reflecting, diffracting or transmitting light of a certain wavelength, cf. [5]. White light is produced by the presence of all wavelengths of visible light: 400 - 800 nm. Due to the absorption or reflection of certain wavelengths of light by chromophores, the wavelength composition of light changes and thus its color, cf. [9], S. 162-163.

Some dyes initially have only a weak affinity for the tissue and are not or hardly able to stain it. However, in combination with other substances, such as mordants, the affinity can be increased.

In one embodiment the "dye" refers to acid dyes, which are preferably water soluble anionic dyes comprising synthetic color, such as alizarine pure blue B, acid red 88, Eosin, acid fuchsin, Congo Red. In some embodiment the "dye" refers to basic dyes, which are preferably water soluble cationic dyes, comprising safranin, basic fuchsin, crystal violet, methylene blue. In some embodiments, the "dye" refers also to direct or substantive dye which is normally carried out in a neutral or slightly alkaline dye bath, preferably with either sodium chloride (NaCl) or sodium sulfate (Na2SO4) or sodium carbonate (Na2CO3). In other embodiments, "dye" refers also to mordant dyes, vat dyes, reactive dyes, disperse dyes, azoic dyes, sulfur dyes.

In further embodiments, the "dye" is selected from but not limited to the group consisting of hematoxylin, nuclear fast red (Kernechtrot), Methyl green, DRAQ5™, DRAQ7™, nuclear yellow (Hoechst S769121), nuclear green DCS1, Hoechst stain, DAPI, propidium iodide, acid fast bacteria stain, alcian blue (pH 1.0) stain, alcian blue (pH 2.5), alizarin red stain, amyloid stain (Congo red), colloidal iron stain. Combined eosinophil-mast cell stain, copper stain, elastic stain, fite's stain, fontana-masson stain, giemsa stain, hydroxystilbamidine, golgi cox stain, gram stain, Prussian blue iron stain, luxol fast blue stain, methyl green pyronin stain, mucicarmine stain, Nissl stain, oil red O stain, Papanicolaou red stain, periodic acid Schiff stain, picro Sirius red stain, pneumocystis stain, phosphotungstic acid hematoxylin stain, safranin O stain, steiner stain, Sudan black, toluidine blue stain, trichome stain, calcium stain, Warthin-Starry stain.

The term "binding of a dye" refers to staining via a dye binding to the tissue section, namely processes that occur during the staining with a suitable dye of a histological section. In one embodiment, "binding of a dye" refers to a chemical staining, wherein during staining a chemical reaction takes please between the components of the tissue and the dye, cf. [11], S. 185.

In some embodiments, "binding of a dye" refers to a physical staining, which is influenced mainly by three factors. These are the solubility of a dye, the density of the tissue structures and the dispersity. Tissues with a higher density are more strongly stained due to the higher number of structural voids. In the case of dispersity, the size of the dye molecules is decisive. The dye dissolves in the substance or is absorbed by the surface of the tissue structure. The principle of physical dying is mainly used in the dying of fats, cf. [11], p. 185; cf. [5].

In another embodiment, "binding of a dye" refers to physico-chemical staining which is based on electrostatic attraction forces and electrostatic adsorption. The dye or tissue may have an acidic or basic pH or a negative or positive charge. For larger differences in charge or pH, the binding is stronger, and for smaller differences, weaker, cf. [11], p. 186. After the dye has attached to the tissue, the two form a chemical bond, cf. [5, 32, 33]. For a dye to bind to a tissue, it must have complementary properties to the tissue. This is necessary for it to prevail over other molecules, cf. Prento [33].

In other embodiments, "binding of a dye" refers to a combination of the above-mentioned embodiments, wherein the binding of the dye to the tissue is a result of the different charges of both components. In some embodiment, positive (basic) dyes for the staining of negative nuclear acids, cf. [9], p. 169, are used. Following the binding of the dye to the tissue, chemical bonds are formed. Ionic bonding is the most frequently occurring bond, cf. [9], S. 170; [5]. Physical influences comprise the density of the structure, the solubility of the dye, and diffusibility as important influencing factors, cf. [9], S. 173.

In one embodiment, staining refers to progressive staining wherein the tissue section is dyed only until the desired reaction is achieved and stopped at this point.

In another embodiment, staining refers to regressive staining wherein the tissue section is over-stained and the excess dye is dissolved out in a subsequent step cf. [5]; [9], p. 174; [10], p. 127. In this case, certain structures in the tissue bind the dye more strongly or prevent it from being dissolved out by the differentiating agent due to a lower permeability, cf. [9], P. 174; [10], P. 119.

*Modelling*

As used herein, the term "modelling" shall mean generating a representational model for simulation of a system behavior. "Modelling of staining" shall mean modelling the behavior of a dye.

In one embodiment, the behavior of a dye refers to transport of the dye molecules, for example from the solution bath to the cell, diffusion of dye molecule within tissue, preferably within a cell, or binding of the dye molecules to the respective tissue. In some embodiments, the behavior of dye refers to the diffusion of dye molecules within tissue, preferably within a cell, and binding of the dye molecule to the respective tissue. In another embodiment, the behavior of dye refers to diffusion of dye molecule within tissue, preferably within a cell. In other embodiments, the behavior of dye refers to binding of the dye molecules to the respective tissue.

The diffusion of dye within tissue comprises, without limitation, the diffusion of dye through the cell membrane, diffusion of the dye through the cytoplasm to the cell nucleus, diffusion of dye through the nucleus, diffusion of the dye within the nucleus to any given binding sites.

In a preferred embodiment the modelling of behavior of a dye is achieved by the diffusion term of the equation system (4.24), wherein the same diffusion coefficient is assumed for the entire cell.

In another preferred embodiment, the diffusion coefficient is dependent of another physical variable, such as a local concentration or temperature.

In another preferred embodiment the modelling of behavior of dye is achieved by the react term of the equation system (4.24).

As used herein, "term" refers to a mathematical expression and could be a number, a variable, several variables, or several variables multiplied but never added or subtracted. In some embodiment, "term" refers to a coefficient. A "diffusion term" relates a variable of diffusion. A "reaction term" relates to a variable of a reaction.

As used herein, "equation system" refers to a statement that describes the behavior of the dye. Equation system refers to one or more equations wherein the equations can be independent from each other or coupled. In one embodiment, the "equation system" refers to diffusion equation. In some embodiments, the equation system refers to reaction equation. In another embodiment, the equation system refers to a reaction-diffusion equation, preferably, the reaction equation and diffusion equation are coupled.

As used herein, the term "diffusion equation" refers to one or more equations describing the behavior of a dye, preferably diffusion within tissue or cell, more preferably the diffusion of dye through the cell membrane, diffusion of the dye through the cytoplasm to the cell nucleus, diffusion of dye through the nucleus, and/or diffusion of the dye within the nucleus to binding sites. If different concentrations of a substance are present between two or more areas, an equalization of the concentrations occurs due to a diffusion flow $J_{diff}$. This equalizing motion is based on the random molecular motion of the particles. These particles constantly collide with other molecules and thus move from areas of higher concentration to those of lower concentration, cf. [52], p. 378; [53], p. 1-2.

In one embodiment, the mathematical description of this flow is according to first Frick's law:

$$J_{\text{diff}} = -D\,\nabla c \qquad (4.11)$$

This represents a linear relationship between the flux $J_{diff}$ and the concentration c. D is the diffusion coefficient, which depends on the material through which the particles diffuse and on the particles themselves, cf. [50, 54, 55]. The assumption made in this embodiment is that mass transfer occurs by diffusion alone. It follows that the flux term from the mass balance equation (4.9) is only composed of a diffusive component:

$$\frac{\partial c_i}{\partial t} + \nabla \cdot J_i = \hat{r}_i \qquad (4.9)$$

$$J = J_{\mathrm{diff}} .\qquad(4.12)$$

As used herein, the term "reaction equation" refers to a statement describing the chemical reaction wherein the reaction partners are tissue to be stained and the dye. The chemical reaction is described as:

$$A + B \leftrightarrow C \qquad(4.13)$$

where A is the freely moving, unbound dye, B is the tissue that has not yet been stained, and C is the result of the binding reaction, the stained tissue. The double arrow $\leftrightarrow$ indicates that the staining is a reversible equilibrium reaction, cf. [13, 56]. The dye can detach from the tissue again. The rate of both reactions, binding and dissolution of the dye molecules to and from the tissue, are described by two rate constants for reactions of reaction order 2. These will be referred to in the following as $k_{on}$ for the binding reaction and $k_{off}$ for the dissolution reaction.

In one embodiment, a binding reaction shall mean that a free positively charged aluminum atom binds to one or two negatively charged phosphorus atoms bound in the cell nucleus in each case [5, 33] during the staining of cell nuclei by hemalaun. The result is a covalent bond, cf. [9], p. 186. The reaction corresponds to equation (4.13). Such a reaction is called a bimolecular reaction, cf. [57] p. 106; resp. 112; [58], p. 7. For the case that (i) $c_A$ and $c_B$ are not equal at time t = 0, and (ii) that neither concentration is significantly larger than the other, the change in $c_A$ with time is given by the Equation:

$$\frac{\partial c_{\mathrm{A}}}{\partial t} = -k_{\mathrm{on}}\, c_{\mathrm{A}}\, c_{\mathrm{B}} \qquad(4.14)$$

The time change of the concentration $c_B$ is described by the same equation, cf. [57] PP. 106, 112; [58], P. 7; [59, 60]. Equation (4.14) is a so-called 2nd order reaction, cf. [58], p. 7. Zimmermann and Siedel [14] also described the binding of the dye to the tissue as a 2nd order reaction. Both conditions (i) and (ii) are fulfilled by the free concentration of the dye $c_A$ and the free number of binding sites $c_B$.

A similar relationship applies to the change in concentration of the bound dye $c_c$, only differentiated by the sign cf. [60].

$$\frac{\partial c_{\mathrm{C}}}{\partial t} = k_{\mathrm{on}}\, c_{\mathrm{A}}\, c_{\mathrm{B}} \qquad(4.15)$$

In some embodiments, the dissolution reaction refers to reversible process of a staining comprising a reverse reaction term. This is modeled as a 1 st order reaction. The bound dye dissolves from the tissue and becomes the free dye again.

$$C \to A + B .\qquad(4.16)$$

This gives the following equation for the change in concentration $c_c$ over time cf. [58], p. 7; [57], p. 102.

$$\frac{c_{\mathrm{C}}}{\partial t} = -k_{\mathrm{off}}\, c_{\mathrm{C}} \qquad(4.17)$$

In one embodiment, binding of dye to the tissue is modelled with one-stage method wherein hemalaun is the preferred dye. The tissue to be stained is stained directly in a hemalaun solution. The reaction:

$$\text{Hematein + Mordant} \to \text{Hemalaun + Side Products} \qquad(4.18)$$

is completed at the beginning of the staining process.

In other embodiments, the behavior of dye is modelled with a reaction-diffusion equation. The term "Reaction-diffusion equation" refers to a statement describing the diffusion of dye within the tissue and the binding of dye to the tissue.

Preferably, the concentration of the dyes bound to tissue is denoted in the following by $c_b$. The index ()b stands for bound and the index ()f stands for free. The concentration of the free, unbound dye is denoted in the following by $c_f$ instead of $c_A$ from equation (4.14).

The concentration $c_b$, which describes the number of free binding sites, is represented by the following difference:

$$c_B = c_b^{max} - c_b .$$ (4.19)

In a preferred embodiment, the reaction-diffusion equation comprises a maximum number of free binding sites on the DNA for the dye, which is given by $c_b^{max}$. The finiteness of the free binding sites becomes clear, for example, by the finiteness of the DNA in a cell nucleus during cell nucleus staining, because the dye binds primarily to the phosphorus atoms of DNA and RNA, cf. [9], p. 186; [5, 27].

In a more preferred embodiment, the reaction-diffusion equation is according to

$$\frac{\partial c_f}{\partial t} = D\nabla^2 c_f - k_{on} c_f \left( c_b^{max} - c_b \right) + k_{off} c_b$$
$$\frac{\partial c_b}{\partial t} = k_{on} c_f (c_b^{max} - c_b) - k_{off} c_b$$ (4.24)

wherein the diffusion part in the equations is responsible for mass transport. For molecules to be transported, they must be free to move. Dyes bound to the tissue, which are described by the concentration $c_b$, cannot be for example transported further. The concentration at the free binding sites $c_b^{max} - c_b$ is also invariant there. From this it follows that only the free, unbound concentration of dyes $c_f$ has a flux term in its mass balance. After substituting equations (4.11), (4.12) and (4.9), the result for $c_f$ is:

$$\frac{\partial c_f}{\partial t} + D\nabla^2 c_f = \hat{r}_f$$ (4.20)

and for $c_b$ without flux term

$$\frac{\partial c_b}{\partial t} = \hat{r}_b .$$ (4.21)

After combining the two reaction equations (4.15) and (4.17) for the outward and reverse reactions, the equation is obtained:

$$\frac{\partial c_b}{\partial t} = \hat{r}_b = k_{on} c_f \left( c_b^{max} - c_b \right) - k_{off} c_b$$ (4.22)

which describes the temporal change of the bound concentration. Now that $\hat{r}_b$ has been determined, by applying equation (4.10), $\hat{r}_f$ can also be calculated as

$$\hat{r}_f = -\hat{r}_b = -\left( k_{on} c_f \left( c_b^{max} - c_b \right) - k_{off} c_b \right)$$ (4.23)

If dye is bound, $c_f$ decreases to the same extent that $c_b$ increases. After substituting equation (4.23) into equation (4.20), equation (4.22) gives the equation (4.24) as the field problem to be solved which is nonlinear and couple.

*Determining the color intensities of the staining*

To obtain information about the color of the stained tissue, a relationship between the color intensity and the bound dye concentration $c_b$ in the section is required.

In one embodiment, the dyes absorb light, for example, hematoxylin and eosin. A relationship between the color and intensity for histological sections is provided by LAMBERT-BEER's law, cf. [27, 66, 67]. This describes the attenuation of a light beam of a given wavelength as it passes through a solution, cf. Kumar [68], p. 17. There are several variants of the notation of the law. One of them is:

$$I(\lambda) = I_0(\lambda)\,\exp(-\varepsilon(\lambda)\,c_{\mathrm{b}}\,h) \qquad (4.25)$$

where $I_0(\lambda)$ is the intensity of the incident light beam, $\varepsilon(\lambda)$ is the absorption coefficient or extinction coefficient, and h is the thickness of the medium flowing through. $I$, $I_0$ as well as $\varepsilon$ depend on the wavelength $\lambda$, cf. [66, 69, 70].

In a preferred embodiment, the intensities of red, green and blue are used, which is also called RGB color space. This is a three-dimensional vector space whose axes are the intensities of the three colors. A point in this space as coordinates means the values of the three-color intensities. One way to describe a color mathematically is by using a combination of these three intensities.

In the origin, the intensities of the three colors red (R), green (G) as well as blue (B), $I_R$, $I_G$ and $I_B$, are equal to zero which corresponds to the "color" black. In the opposite to the origin they have their maximum value which corresponds to the "color" white, cf. [69]. Often the value 255 is chosen as the maximum intensity of the respective color. Thus white corresponds to an RGB value of (255, 255, 255). However, scaling the intensities to 1 is also possible, cf. [66]. In addition to the RGB color space, there are others, such as the Hue-Saturation-Intensity color space, in which the color is composed of the color value (hue), the color saturation (saturation), and the intensity (intensity). The individual color spaces can be transformed into each other, cf. [22, 66, 69].

Knowing that the use of one parameter of the extinction coefficient $\varepsilon$ is sufficient for the determination of the intensity for red, green and blue, equation (4.25) gives the three equations:

$$I_{\mathrm{R}} = I_{0,\mathrm{R}}\,\exp(-\varepsilon_{\mathrm{R}}\,c_{\mathrm{b}}\,h) \qquad (4.27)$$

$$I_{\mathrm{G}} = I_{0,\mathrm{G}}\,\exp(-\varepsilon_{\mathrm{G}}\,c_{\mathrm{b}}\,h) \qquad (4.28)$$

$$I_{\mathrm{B}} = I_{0,\mathrm{B}}\,\exp(-\varepsilon_{\mathrm{B}}\,c_{\mathrm{b}}\,h) \qquad (4.29)$$

which are used for the determination of the RGB intensities. In this embodiment, RGB color space is used to determine the coloration, so that the intensities determined with equations (4.27, 4.28, 4.29) can be used directly to represent the resulting color.

In other embodiment, dyes reflect light rather than absorb it, such as 3,3'-diaminobezidine (DAB), follow other laws which can be selected by a skilled person in the field, as may be required.

As used herein, the term "numerical implementation", also called numerical conversion, refers to a mathematical tool for solving a numerical problem. Numerical implementation comprises, without limitation, the finite-element-method (FEM) or finite-difference-method (FDM). The person skilled in the art is able to choose a suitable method to numerically implement the modelling.

In one embodiment, the modelling of a behavior of a dye in histological section is numerically implemented, preferably with the help of finite-element-method with respect to spatial discretization, with the help of finite-difference-method with respect to time discretization.

In a preferred embodiment, the numerical implementation of modelling a behavior of a dye comprises generalization of the diffusion-reaction equation, determination of a material parameter and a time discretization of a concentration of free dye and a concentration of dye which binds to the tissue.

As used herein, the term "generalization" refers to generating a weak form of the equation system. In a preferred embodiment, the equation system refers to equation (4.24) which is a coupled field problem. The generalized equation (4.24) is obtained as:

$$\int_{\Omega} \dot{c}_{\mathrm{f}}\, \delta c_{\mathrm{f}}\, \mathrm{d}V = \int_{\partial\Omega} \mathbf{n} \cdot (D\nabla c_{\mathrm{f}}\, \delta c_{\mathrm{f}})\, \mathrm{d}A - \int_{\Omega} D\nabla c_{\mathrm{f}} \cdot \nabla \delta c_{\mathrm{f}}\, \mathrm{d}V$$

$$- \int_{\Omega} k_{\mathrm{on}} c_{\mathrm{f}} (c_{\mathrm{b}}^{\mathrm{max}} - c_{\mathrm{b}})\, \delta c_{\mathrm{f}}\, \mathrm{d}V + \int_{\Omega} k_{\mathrm{off}}\, c_{\mathrm{b}}\, \delta c_{\mathrm{f}}\, \mathrm{d}V \qquad (5.4)$$

$$\int_{\Omega} \dot{c}_{\mathrm{b}}\, \delta c_{\mathrm{b}}\, \mathrm{d}V = \int_{\Omega} k_{\mathrm{on}} c_{\mathrm{f}} (c_{\mathrm{b}}^{\mathrm{max}} - c_{\mathrm{b}})\, \delta c_{\mathrm{b}}\, \mathrm{d}V - \int_{\Omega} k_{\mathrm{off}}\, c_{\mathrm{b}}\, \delta c_{\mathrm{b}}\, \mathrm{d}V \,. \qquad (5.5)$$

The two field variables that are searched for during the calculations are the free and bound dye concentrations $c_f$ and $c_b$. The two variables are present in both equations, resulting in a two-way coupling. With this function, the element degree of the approach functions can be specified, cf. [76], S. 76. For $c_f$ and $c_b$ quadratic functions are used.

In some embodiments, the following assumptions can be made for modeling the staining of histological sections:

1. The number of binding sites of the tissue for the dye is constant.

2. The concentration in the dye bath is constant for the considered period of dyeing.

3. The binding of the dye to the tissue is a reversible equilibrium reaction.

4. The temperature in the dye bath is constant.

5. A histological section is divided into the following 3 components: nucleus, cytoplasm, vacuole.

6. The cell nucleus has the shape of a sphere or a rotationally symmetrical ellipsoid.

7. The diffusion coefficient in the nucleus and cytoplasm is identical.

8. Above the height of the cut, there is only one nucleus which is supported, for example, by the section heights in brain slices, which are about 10 $\mu$m high. Typical diameters of the nucleus of glial cells, which are a major component of cells in the brain, cf. [77], p. 177, are 5-10 $\mu$m, cf. [17], S. 90.

9. The height of the section and the diameter of the nuclei in this section are identical.

These assumptions can be applied in any embodiment separately or in any combination.

As used herein, the term "space discretization" refers to transferring a model of a behavior of a dye in a tissue section into discrete counterparts. In one embodiment, with the help of a finite-element mesh, a discretization of the space is carried out. This is necessary to reduce the in principle infinitely large number of elements, of which the body is composed, to a finite number, cf. [75], p. 19. The concentrations and intensities can then be evaluated at the individual nodes of the elements. In the following, the meshes and their creation applied in the Example 4 are described. For this case, a 1D as well as a 2D mesh is created.

In preferred embodiments, a distinction is made between the three areas of nucleus, cytoplasm and vacuole. The basis for this is that these are three areas that are distinguished from each other during overview staining, such as HE staining.

As used herein, the term "time discretization" refers to transferring a continuous time course of a staining into discrete counterparts. In one embodiment, the time discretization of the field variables $c_f$ and $c_b$ is necessary, because for both variables a time derivative occurs in the equations.

In a preferred embodiment, the finite difference method (FDM) was used, for example:

$$\dot{c}_{\mathrm{f}} \approx \frac{c_{\mathrm{f}}^{n+1} - c_{\mathrm{f}}^{n}}{\triangle t} \quad ; \quad \dot{c}_{\mathrm{b}} \approx \frac{c_{\mathrm{b}}^{n+1} - c_{\mathrm{b}}^{n}}{\triangle t} \,. \qquad (5.18)$$

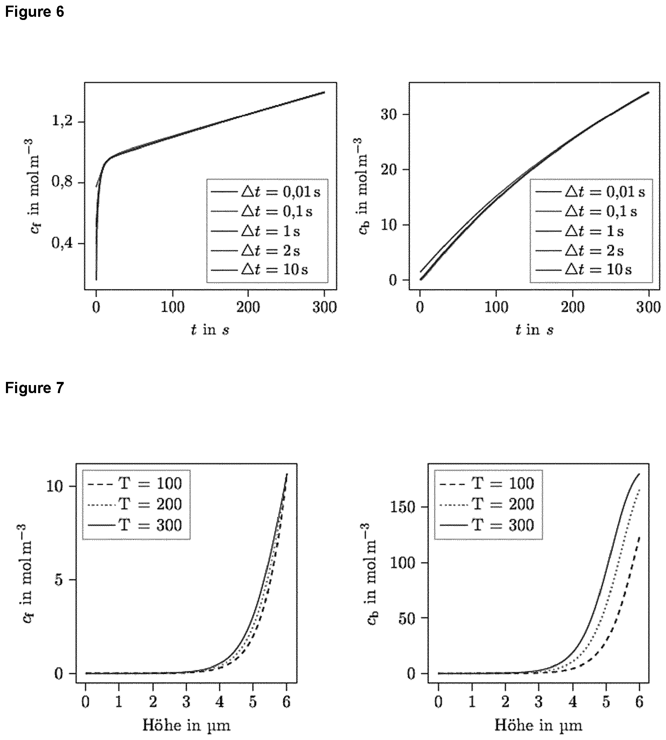

In FDM, a distinction is made between implicit methods, such as Euler Backward, and explicit methods, such as Euler Forward. An advantage of the explicit methods is that for the determination of the value for the next time step, no system of equations has to be solved. In FDM, the system of equations is divided into a series of quasi-static problems, where each time step is calculated in succession. In order to determine the required time step t a convergence study can be performed. For this purpose, different $\Delta t$ are given and the results of the free and bound concentrations $c_f$ and $c_b$ can be averaged over height and plotted over time. By way of example, the results of the study below are shown in Figure 6. Apart from $\Delta t = 10$ s, no differences can be seen for the individual time increments. In the remainder of the examples, the time step size $\Delta t$ was chosen to be $\Delta t = 1$ s, so that the desired quantities can be determined at each second.

*Embodiments relating to computer implementation*

The present invention is, in preferred embodiments, characterized as a method or system, referring to a computer implemented system in which software configured to carry out the inventive method is stored.

The system of the invention may in some embodiments comprise one or more conventional computing devices having a processor, an input device such as a keyboard or mouse, memory such as a hard drive and volatile or nonvolatile memory, and computer code (software) for the functioning of the invention. The computers may also comprise a programmable printed circuit board, microcontroller, or other device for receiving and processing data signals such as those received from the local controllers, programmable manufacturing equipment, programmable material handling equipment, and robotic manipulators.

The system may comprise one or more conventional computing devices that are pre-loaded with the required computer code or software, or it may comprise custom-designed hardware. The system may comprises multiple computing devices which perform the steps of the invention. In certain embodiments, a plurality of clients such as desktop, laptop, or tablet computers can be connected to a server such that, for example, multiple users can enter their orders for personalized products at the same time. The computer system may also be networked with other computers over a local area network (LAN) connection or via an Internet connection. The system may also comprise a backup system which retains a copy of the data obtained by the invention. The data connections of step e) may be conducted or configured via any suitable means for data transmission, such as over a local area network (LAN) connection or via an Internet connection, either wired or wireless.

A client or user computer can have its own processor, input means such as a keyboard, mouse, or touchscreen, and memory, or it may be a dumb terminal which does not have its own independent processing capabilities, but relies on the computational resources of another computer, such as a server, to which it is connected or networked. Depending on the particular implementation of the invention, a client system can contain the necessary computer code to assume control of the system if such a need arises. In one embodiment, the client system is a tablet or laptop.

The components of the computer system may be conventional, although the system will typically be custom-configured for each particular implementation. The computer system may run on any particular architecture, for example, personal/microcomputer, minicomputer, or mainframe systems. Exemplary operating systems include Apple Mac OS X and iOS, Microsoft Windows, and UNIX/Linux; SPARC, POWER and Itanium-based systems; and z/Architecture. The computer code to perform the invention may be written in any programming language or model-based development environment, such as but not limited to C/C++, C#, Objective-C, Java, Basic/VisualBasic, MATLAB, Simulink, StateFlow, Lab View, or assembler. The computer code may comprise subroutines which are written in a proprietary computer language which is specific to the manufacturer of a circuit board, controller, or other computer hardware component used in conjunction with the invention.

In certain embodiments of the invention, a human monitor may be present to oversee the simulation processes and to resolve any errors or faults. Nevertheless, in preferred embodiments of automated or semi-automated execution of the method, the monitor will not be substantially participating in the method beyond preparation and mounting of a slide to microscopic equipment, and therefore will not routinely need to interfere with the computer-implemented aspects of the invention.

**FIGURES**

The following figures are presented to describe particular embodiments of the invention, without being limiting in scope.

**Figure 1:** Schematic representation of the histological section with the diffusion flow $J_{diff}$ and the assumed dimensions. The bottom of the section is located on a glass slide through which diffusion of the dye is not possible. This is indicated by the hatching.

**Figure 2:** Schematic representation of an xz-plane of the histological section with the diffusion flux $J_{diff}$ acting on the top of the section. The two regions of the cell as to nucleus and cytoplasm, are shown with the expected gradients of the concentration of unbound dye $c_f$ over the height of the tissue section. The dashed lines are used only to illustrate the different concentration gradients when using a 1D theory.

**Figure 3:** Schematic representation of the applied 1D mesh. At z=h, there is a flow of free concentration $c_f$ due to diffusion.

**Figure 4:** 2D mesh used in test case A.

**Figure 5:** Presentation of the relevant steps during the creation of a FE mesh based on an image of a scanned histological section. The slide from which a section is shown in (a) was stained for 13 s with Mayer's hemalum. In (b) the binary mask for the cell nuclei is depicted. The geometry is shown in (c). In (d) the FE mesh for the projection is presented. Additionally, a single nucleus (red outlined) is shown with a high magnification from the original image. The resulting mesh for this nucleus is shown at the bottom of the image of the "FE mesh for projection".

**Figure 6:** Results of the convergence study for different time step Δt using the model set up for test case A, the material parameters according to table 1 as well as a 1D mesh. Plot of the free concentration $c_f$ (left) and the bound dye concentration $c_b$ (right) averaged over the height.

**Figure 7:** Plot of unbound hemalaun concentration $c_f$ (left) and bound concentration $c_b$ (right) versus height at time t = 5 min, using the diffusion-reaction equation system of test case A and a 1D FE mesh.

**Figure 8:** Plot of the relationship of $c_f$ and $c_b$ at time t = 5 min, using the diffusion-reaction equation system of test case A and a 1D FE mesh, to each other.

**Figure 9:** Progress of $I_R$, $I_G$, $I_B$ over time for nuclear staining with hemalaun using a 1D mesh.

**Figure 10:** Progress of $I_R$, $I_G$, $I_B$ over time for nuclear staining with hemalaun using a 2D mesh.

**Figure 11:** Progress of $I_R$, $I_G$, $I_B$ over time for nuclear staining with hemalaun for test case B.

**Figure 12:** Sections of the frozen sections which were each stained for different lengths of time.

**Figure 13:** Average $I_R$, $I_G$, $I_B$ of the cell nuclei on the basis of the frozen sections of Figure 12 after different staining times. 1x 100x magnification in each case is applied.

**Figure 14:** Comparison of the mean values of the $I_R$, $I_G$, $I_B$ of the real, experimental investigated stained slides (exp) with the numerically simulated staining (sim). For the calibration of the geometry and $c_b^{max}$ the section is depicted in Figure 18 (t = 100 s, left).

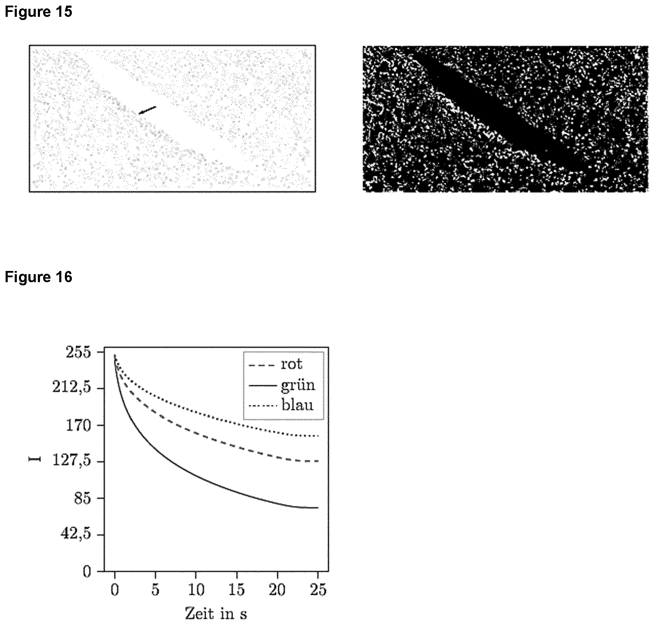

**Figure 15:** Representation of the unstained histological section (left) and the binary mask created with it (right). The arrow in the unstained section points to a nucleus.

**Figure 16:** Plot of $I_R$, $I_G$, $I_B$ using a 1D model for a diffusion coefficient of D=1x $10^{-11}$ $m^2$ $S^{-1}$

**Figure 17:** Flowchart of the steps required to conduct the simulation for a virtual staining of a histological slide.

**Figure 18:** Comparison of the real stained sections (left) with the results of the simulated staining (right). The sections used for the calibration of the geometry and the material parameters are highlighted with the red box.

**Figure 19:** Box plots of $I_R$, $I_G$, $I_B$ for the three section of each experimental histological slide (horizontal alignment) which were stained for a different staining time (vertical alignment). These are the sections which were used to compute the mean values of the $I_R$, $I_G$, $I_B$. On the right side of each row the box plots from the computed virtual staining are depicted.

**Figure 20:** Representation of the course of (a) the unbound hemalum concentration $c_f$ and of (b) the bound concentration $c_b$ over the height for different staining times, t = 13 s, t = 25 s and t = 50 s. For the computation the equations 4.24 and a one dimensional FE-mesh were used.

**EXAMPLES**

One aspect of the invention is to model and simulate the staining of cell nuclei with the dye hemalaun. Two models (test case A and test case B) are set up for this purpose. In the first model according to the test case A, the diffusion of the dye is regarded as a time-limiting factor and a coupled diffusion-reaction equation system is set up. This system of equations is then solved using the finite-element-method and the finite-difference-method. In the second model according to test case B, it is assumed that the influence of diffusion is negligible. A simple reaction equation is set up, which is solved analytically.

**Example 1:** Preparing a histological section in general

The typical steps in the preparation of a histological section are described in this example. For certain examinations and tissue types, there are exceptions with regard to the procedure and the execution of individual steps, as described in the referenced literature [9-11]. In this example, the staining of a section fixed in formalin and embedded in paraffin is described. The important steps comprise obtaining tissue sample, fixing in formalin, embedding in paraffin, cutting with Mikrotom and staining.

After part of the tissue has been removed from a fresh tissue sample (I), it is fixed in a fixative liquid, e.g. formalin (II). The aim of this is to prevent cell death in the form of necrosis, as a result of interrupted oxygen supply, cf. [9], S. 40; [10]. The fixation causes the tissue to harden, see [9], p. 42. [9], p. 42. In the further course, the tissue is to be cut into thin section so that it can be examined with the aid of a microscope or histological scanner. To be able to cut the tissue, a certain hardness is required, as otherwise the specimens will deform during the cutting process. The required hardness has not yet been achieved by fixing in formalin. Therefore, the sections are dehydrated in an ascending alcohol series and embedded in paraffin (III). In this process, the fixing liquid is replaced by the embedding medium, for example paraffin, cf. [9], p. 87; [10], pp. 75-76. The result is a paraffin block in which the sample is located.

The hardness of the block is sufficient to ablate thin sections of the sample with the aid of a usually hand-held microtome (IV). The section thickness of a kerosene block is between 1-10 $\mu$m, cf. [9], p. 125; [11], p. 120. The desired section thickness depends, among other things, on the tissue to be examined. For soft tissues such as the brain, a larger section thickness of e.g. 10 $\mu$m should be used, cf. [9], S. 104; [29]. In-plane tissue sections usually have dimensions of 20 $\times$ 15 mm, cf. If the thickness of the cut is selected too large, the cuts may curl up. If the cut thickness is too small, the cuts may stick together, cf. [9], S. 143-144.

After cutting, the sections are mounted on a slide and dried in a heating cabinet at max. 60 °C. Subsequently, the sections can be placed in an automatic dyeing machine, in which the next work steps take place, cf. [11], p. 188. During staining (V), several glass slides are -fixed in slide baskets. Such a slide basket with the histological sections placed on the glass slides. The first step in the automatic stainer is to soak the section in xylene to remove the paraffin. This is necessary because otherwise staining is not possible, cf. [11], p. 191. Subsequently, the sample is immersed in several containers of decreasing ethanol concentration for re-hydration, cf. To avoid shrinkage during rehydration, the ethanol concentrations are gradually reduced or increased, cf. [9], p. 90. Next, the section is dyed. In this step, the slide basket with the sections is immersed in the staining bath. Depending on the automatic stainer, the basket remains there at rest for the designated time or it is swiveled in the basin by an up and down movement, cf. [9], P. 234; [10], P. 77.

Subsequently, the staining of the section is fixed over an inclusion medium and the stained section is covered with the inclusion medium and coverslip, cf. [11], S. 193,194.

**Example 2:** Hematoxylin-Eosin staining (HE staining)

Hematoxylin-eosin staining is the most widely used overview stain in histology. It can be used to distinguish between cell nuclei and cytoplasm. Nuclei have a black-blue staining and cytoplasm a reddish-violet staining. The staining of nuclei is primarily by hematoxylin and the staining of cytoplasm by eosin, cf. [5, 9-11]. A common reason for its use is to investigate the presence or degree of malignancy of tumors following a biopsy, cf. [7, 34, 35]. However, the invention is not limited to the examination of tissue altered by tumors; tissue alterations caused by other diseases can also be examined, cf. [36]. Furthermore, an investigation of the activity of cells such as bone cells (osteoblasts and osteocytes) is possible by HE staining, cf. [37].

In some embodiments, however, only staining with hematoxylin is investigated. Staining with eosin is typically performed regressively, cf. [9], p. 188; [10], p. 126. The simulation of a regressive staining requires modeling of differentiation. A model that can model the progressive staining of histological sections is established here.

In addition to overview staining, there are also so-called special staining procedures. After such a special staining, a counterstaining is usually performed. For example, the cell nuclei are stained to increase the contrast. An example of such a special staining is immunohistochemical staining. A typical dye for such counterstaining is hematoxylin, cf. [28]; [10], p. 337, which is the most commonly used stain for staining cell nuclei, [33].

Hematoxylin must first be oxidized and brought into contact with a mordant so that it can bind to the tissue components as a dye. Mordants are usually salt solutions of metals such as aluminum. The dye molecules react with the mordants to form a stain. It is this stain which binds to the tissue to be dyed, cf. [9], S. 178; [5, 31]. There are various protocols for the preparation of stains based on hematoxylin. These differ in terms of the compositions of hematoxylin with oxidizing agents, stabilizers and acid additives, [9-11, 31]. Increasing the hematoxylin concentration not only causes more intense staining, but also stains tissue components that are not stained at a lower concentration, cf. [31].

The composition, which is also used at the University Hospital Carl Gustav Carus Dresden (UKD), is that according to the Mayer protocol. The resulting varnish is called Mayer's Hemalaun. The aluminum compound Kalialaun or aluminum sulfate is used as the mordant, cf. [11], P. 200; [9], P. 185; [38]. But even with the hemalaun recipe according to Mayer, there are significant differences in composition, cf. [9, 10, 31, 38]. Therefore, the information on the compositions of the components in the hemalaun recipe used is of crucial importance. In the UKD, a mixture of hemalaun from Merck and SAV is used. In these two recipes, the hematoxylin content of 4.4 g is significantly higher than in the hemalaun recipes given by [9, 11].

An important component of the cell nucleus, in addition to the nuclear envelope and the nuclear sap, is chromatin 1. This is composed of DNA and proteins. One component of DNA, besides a base and a pentose, is phosphoric acid, cf. [17], P. 14; [19], P. 86; [32]. RNA has a very similar structure to DNA. They differ only with respect to the pentose, [19], p. 86. Due to the phosphoric acids, the nucleus has an overall acidic pH and thus a negative charge. For this reason, following the physicochemical dye theory, see section 3.3.3, a positive dye compared to the nucleus is appropriate, cf. [9], S. 169; [32]. This attaches to the nucleus and forms a stable covalent bond with it, cf. [9], P. 178; [11], P. 202, [10], P. 116, [27]. However, the reason for the stainability of the nucleus with hemalaun is not solely due to the presence of the phosphate groups. Even after removal of these groups, staining of the nucleus with hemalaun is possible, cf. [9], S. 169; [31]. One possible reason for this is that proteins are also stained, as can occur with regressive staining by hemalaun, cf. [27].

The typical blue staining of the nuclei only appears when the section is rinsed in tap water or weak bases, cf. [27, 31]; [11], p. 202; [9], p. 185; [10], p. 127. Rinsing is the next step after staining with hematoxylin.

Modelling the diffusion

When simulating the staining of histological sections, determining the required spatial dimension of the problem to be modelled is employed. The modelling of the staining depends on the size of the diffusion coefficient as well as the process of time of the staining. In the following, a distinction is made between test case A and test case B. In the example 1 directed to test case A, the modelling of the staining is done with a diffusion coefficient of $D = 10^{-14} - 10^{-16}$ m$^2$ s$^{-1}$ as determined above. In the example 2 directed to test case B, a larger diffusion coefficient of $D = 10^{-11}$ m$^2$ s$^{-1}$ is assumed. The same material parameters given in Table 1 are used for the examples.

**Example 3**

Due to the small thickness of a histological section, which is usually h = 1 - 10 $\mu$m, and the relatively much larger in plane dimensions of 20 $\times$ 15 mm, the use of a two-dimensional theory is reasonable. Assuming a scalar diffusion coefficient, the diffusion velocity is the same in all three spatial directions. The smaller the dimensions in one spatial direction the smaller the distance the particles have to travel and the faster the particles diffuse along this axis. For a histological section, the height has the smallest dimension, see Figure 1. The glass slide on which the specimen is placed blocks diffusion from the bottom of the section. It follows that diffusion flow occurs only in the negative z-direction. The diffusion flux along the xz as well as the yz surfaces is negligible, due to the much larger dimensions compared to the height. For this reason, it is possible to consider the staining as a 1D problem.

As already described regarding the determination of diffusion coefficients, the assumption is made that the diffusion coefficient in the nucleus and cytoplasm is the same. The consequence of this is that the dye molecules diffuse uniformly over the height, regardless of whether a nucleus is present in the area or not. However, when using a 1D theory, there are differences in the course of the free concentration of the dyes $c_f$ over the height. This is shown schematically in Figure 2. The reason for this is the different maximum absorbable dye concentration $c_b^{max}$ the nucleus and the cytoplasm. The concentration of the free dye $c_f$, which is bound in the area of the nucleus, is significantly greater than in the cytoplasm. This allows the dye to diffuse faster along the z-direction in the cytoplasm.

Due to the concentration difference visible in Figure 2 and the resulting concentration gradient between cytoplasm and nucleus, a diffusion flow between these two areas is to be expected. In Figure 2, only a section through the xz-plane is shown. However, the same figure could be made for the yz-plane, since the nucleus is enclosed by cytoplasm from all sides, (cf. [17], p. 14; [19], p. 5). This additional flow, which will occur in both the x-direction and the y-direction, cannot be represented using 1D theory. The use of a 3D theory must be considered. This is capable of representing the additional fluxes from the x and y directions. However, it must be determined whether the magnitude of the lateral fluxes justify the additional computational effort. A significant advantage of the 1D theory and corresponding disadvantage of using a 3D theory is the computational time required.

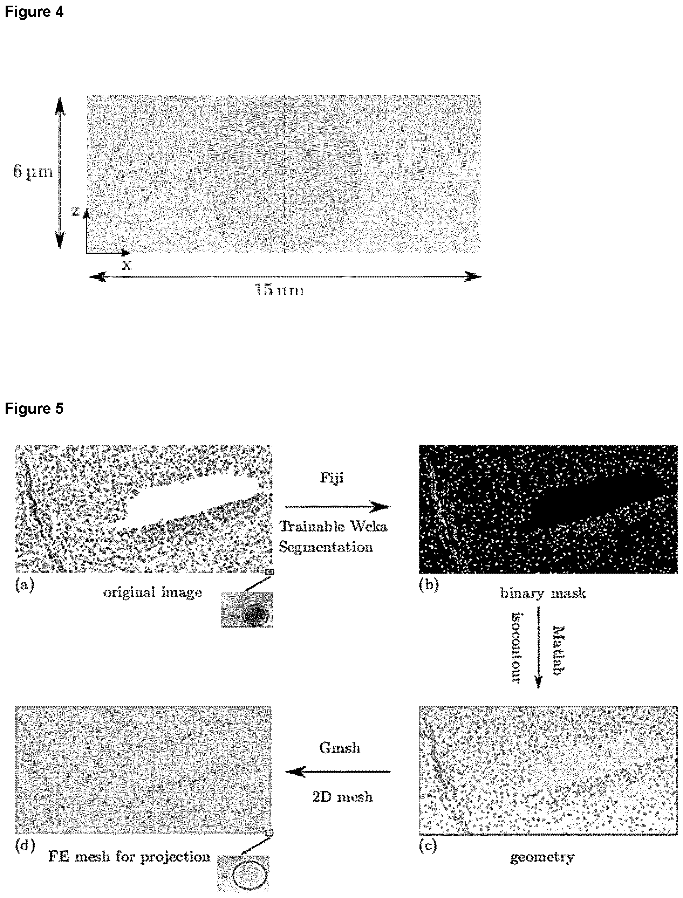

In one embodiment, the assumption is made that the cell nucleus has a rotationally symmetric shape in the form of a sphere or ellipse. This makes it possible to exploit an axis of symmetry, which is why a 2D mesh can be used instead of a 3D mesh without any loss of information. Figure 4 shows such a mesh. The determination of whether the use of a 2D mesh is necessary for test case A.

**Example 4**

In the second test case, a high diffusion coefficient of $D = 1^{-11}$ m$^2$ s$^{-1}$ is assumed, as it results when using the low viscosities of 1-20 mPa s. Due to the small thickness of a section of a few $\mu$m, the diffusion after

$$t = \frac{2*1^{-11}}{(6e-6)^2} \text{ s} = 0,55\text{s}$$

completed. Due to the short diffusion time the simplifying assumption is made that the section is completely saturated during the entire - simulated dyeing time. The free dye concentration $c_f$ is equated with the constant dye concentration $c_{H\alpha ema}$ in the solution pool: $c_f = c_{Haema}$. This is constant over height. This simplifies the nonlinear partial differential equation system (4.24) to the linear differential equation:

$$\frac{\partial c_\text{b}}{\partial t} = k_\text{on} c_\text{Haema}(c_\text{b}^\text{max} - c_\text{b}) - k_\text{off} c_\text{b} . \tag{5.16}$$

Equation 5.16 can be solved analytically. The solution of this inhomogeneous differential equation of 1 st order with constant coefficients is:

$$c_\text{b}(t) = \hat{A} \exp^{t(-k_\text{on} c_\text{Haema} + k_\text{off})} + \frac{k_\text{on} c_\text{Haema} c_\text{b}^\text{max}}{k_\text{on} c_\text{Haema} + k_\text{off}} \tag{5.17}$$

with the constant $\hat{A}$, which can be determined with the help of an initial condition.

Spatial discretization

With the help of a FE mesh, a discretization of the space is carried out. This is necessary to reduce the principally infinitely large number of elements, of which the body is composed, to a finite number (cf. [75], p. 19). The concentrations and intensities can then be evaluated at the individual nodes of the elements. In the following, the meshes and their creation for example 1 are described. For this case, a 1D mesh in example 3 as well as a 2D in mesh in example 4 is created.

In some embodiments, a distinction is only made between the three areas of nucleus, cytoplasm and cavities. The basis for this is that these are the three areas that are distinguished from each other during overview staining, for example a HE-staining. The staining of individual cell organelles is done by special stains, which are not dealt with in the present work. However, the basic procedure is similar, with the difference that the modeled areas of the cell may differ.

**Example 5:** Generating 1D mesh for test case A

The mesh is defined by the FEniCS function IntervalMesh. A schematic representation of the mesh is shown in Figure 3. For the 1D mesh, no distinction is made with respect to a mesh for the nucleus or for the cytoplasm.

In each embodiment, a calculation is performed in which the assumption is made that the proportion of nucleus or cytoplasm is 100%. Thereby the two differ ranges in the present work with respect to the material parameter $c_b^{max}$.

**Example 6:** Generating 2D mesh for test case A

With the calculation based on a 2D mesh, only a single cell was initially modelled. For this, a cell nucleus with a diameter of d = 6 $\mu$m is assumed. Further, the assumption is made that the nucleus is located in the center of the cell.

Around nucleus is the cytoplasm. In order to create the mesh for the 2D calculation, a surface body is created with the help of the SolidWorks c software, which is then used as a STEP file and opened with the program GMSH [96]. The geometry of the nucleus and the cytoplasm are each divided into a separate "physical group". This is necessary to be able to assign different material parameters to these areas in the further course with FEniCS. Subsequently, the mesh generation is performed with GMSH. The different colors of the elements symbolize the separated areas in GMSH. The elements used are Lagrange tetrahedra. The meaning of the colors of the elements and the element type are identical for the following meshes created with GMSH.

To save further calculating time, it would be possible to separate the mesh along the axis of symmetry shown as a dashed line in Figure 4 and simulate only one of the halves. Applying a 2D mesh for example 3 results in a rotationally symmetric concentration state, analogous to the plane tension, or distortion state. Although the diffusion flux in the y-direction is not modelled by exploiting the symmetry, it could be calculated.

**Example 7:** Generating a FE-mesh based on a real histological section

The procedure for creating an FE mesh based on a real section is shown as a flowchart in Figure 5. A real section, which was created by the Uniklinikum Dresden, is used as an example.

As a starting point for the generation of such a FE mesh, an image of the stained section to be modeled is required. This is then opened with the program Fiji [97]. If only a certain area of the image is to be examined, it can be selected with the "Rectangle" tool, the surrounding area can be removed with "clear outside" and the image can then be cropped with "crop". On this a binary mask of the image is created. This means that the image consists only of pixels, which have the value 1 or 0. This makes it possible to distinguish between nuclear regions, cytoplasmatic regions, interstitial regions and empty regions. The pixels of this mask have the value 1, if it is a cell nucleus, or the value 0, if it is not a cell nucleus. There are several ways to generate this mask. On the one hand, the tool "threshold" can be used. Each pixel that is below a certain value is assigned to one class, and each pixel that is above a certain value is assigned to the second class. The pixels of these two classes are then set to 0 and 1, respectively.

Another possibility is to use the "Trainable Weka Segmentation" plugin, which was developed by Arganda-Carreras et al [98]. Here, an AI model is trained to perform segmentation into two (or even more) classes. To do this, a selection of pixels is assigned to a class A and another selection of pixels to a class B. Then, the program creates a binary mask based on these selections. As the name "trainable" implies, the program uses machine learning, among other techniques, to do this. In the segmentations performed in this work, a satisfactory segmentation was usually achieved after a maximum of 2 runs. An advantage of using this program is that the parameters with which the segmentation is performed can be stored. Therefore, no new training is required for further sections that are stained in the same way and therefore have similar staining of the cell nuclei and cytoplasm. Further information about the plugin and its functions can be taken from [98] and the website given therein.

The binary mask generated in this way can then be saved as a tif file, for example. If the optically empty vacuole, are also to be considered in the FE mesh, the generation of a second binary mask is necessary for it. In this case, a distinction is made between vacuole and non-vacuole. If two cell nuclei lie close together, it can come to the fact that these are connected in the binary mask. One possibility to separate these cell nuclei from each other is offered by the "watershed" tool.

For the generation of the geometry based on this binary mask the software MATLAB is used. First, the image is loaded into MATLAB. Then the edges, where a transition from pixels with values 1 to pixels with values 0 takes place, are approximated with lines. This is done with the MATLAB function isocontour from Kroon [99]. The result of the function are the lines just described, the points, from which the lines consist, and a cell array. Each entry in this cell array is a series of points that approximate the edges from the binary image. For a closed line array, the first and last entries are identical. As a result, the points along the edges of the geometry that one wants to map, as well as the information about which points form a closed curve with each other, are available. The meshing of the geometry is to be done with GMSH. Therefore, the information obtained by isocontour is written down in a syntax which can be read by GMSH. The cell nuclei are represented with splines. It has been shown that for the large-scale voids the use of splines is inconvenient. Due to the large number of points used to approximate the voids, a single spline has problems to account for all points. Therefore, the vacuoles are approximated using a large number of individual lines. For this purpose, two consecutive points are connected to each other. The only manual input when using the MATLAB script is to specify the title of the binary mask for which the geometry is to be generated.. The .geo file can then be opened in GMSH and the 2D mesh created. In GMSH, among other things, the desired element size can be set.

Two MATLAB scripts are generated: one that distinguishes between nucleus and cytoplasm only, and one that distinguishes between nucleus, cytoplasm and the vacuoles. The result of this process is a FE mesh that maps the geometry of the histological section. In this process, FEniCS makes it possible to distinguish between elements belonging to cell nuclei and elements belonging to the cytoplasm or the cavities.

In order to solve the system of equations (4.24), initial and boundary conditions are required. These differ for test example 1 and 2 due to the different assumptions in these two examples. No boundary conditions are necessary for the assumption of example 2 because no spatial derivations were performed in the equation.

**Example 8:** Boundary conditions for assumption of test case A

During the staining process, the histological sections are immersed in a solution bath with an excess concentration of dye and remain there for the duration of the staining. This is modeled by specifying a constant concentration of free dye $c_f$ at the top of the section, see Figure 1.

For the lower edge, a Neumann boundary condition is given for the diffusion flux $J_{diff}$, which is set to zero. The reason for this is the glass slide blocking the flux. The two boundary conditions just described both concern the concentration of the free dye molecules $c_f$. For the concentration of the bound dye molecules $c_b$, no information is lost as a result of the derivative. Therefore, no boundary conditions are necessary for $c_b$. For the 2D mesh generated in example 6, the boundary conditions for $c_f$ for the top and bottom edges are the same as for the 1D mesh. In reality, other cells adjoin to the left and right of the modeled cell, unless the cell is directly on the edge of the cut. For this reason, the diffusion flux $J_{diff}$ at the left and right edges is set to zero as a symmetry boundary condition.

**Example 9:** Initial conditions for the assumption of test case A

For $c_f$ and $c_b$, due to the time derivatives occurring in the equations (4.24), initial conditions must be specified. The calculation starts from the time at which the section is dipped into the basin with the dye. At the time t = 0 s, the section is still outside the basin with the dye. It is not immersed in the dye until the next time step. This results in the initial conditions $c_f$ (x, t = 0) = 0 and $c_b$ (x, t = 0) = 0.

**Example 10:** Initial conditions for the assumption of test case B

As an initial condition for $c_b$, the concentration is set to zero, with the same justification as for example 1: $c_b$ (x, t = 0) = 0. This gives the constant Â from equation (5.17) to $$\hat{A} = \frac{k_{on}c_{Haema}\,c_b^{max}}{k_{on}c_{Haema}+k_{off}}$$ the results of the calculated intensities based on the models presented initially in test case A and B are compared in the examples 11 and 12. Subsequently, a decision is made which model is to be favoured.

**Example 11:** Determination of the intensities of dye by means of 1D mesh and 2D mesh for the assumption of test case A.

1D mesh:

In order to apply LAMBERT-BEER's law (4.25), the calculated concentrations of the bound dye molecules must first be converted into a suitable form. For this purpose, the $c_b$ for the individual nodes, for each time step were stored in a list. Subsequently, the mean value was calculated for the $c_b$ stored in this way for each time step. The reason for this procedure arises from the fact that the adjusting color results from the superposition of the light absorbing bound dye concentration over the height. The result is the value for $c_b$ averaged over height for each time point. This can be substituted into equation (4.25). Together with the extinction coefficients determined by calculation of color intensities with Lambert-Beer's Law, the intensity of the incident light beam I0 and the height h of the section, all variables of equation (4.25) are thus determined.

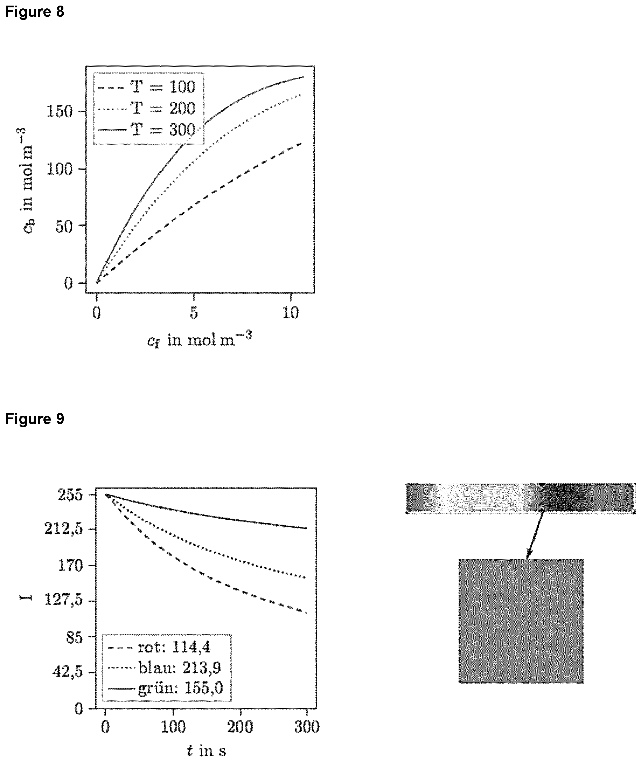

Figure 9 shows the course of the three intensities overtime. You can see the stronger drop of the intensities at the beginning, which flattens out with time. In the literature, this is described in terms of a strong increase in staining intensity at the beginning of the staining. Intensities that become lower mean a darker color in the RGB color space. A darker color will be seen in the further course as a more intense color is indicated. The intensities at time t = 5 min are given as an entry in the legend of Figure 9. The resulting color can be seen in the right figure.

2D mesh:

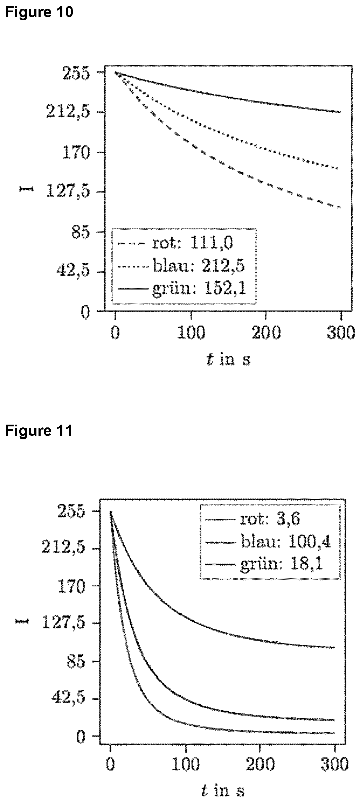

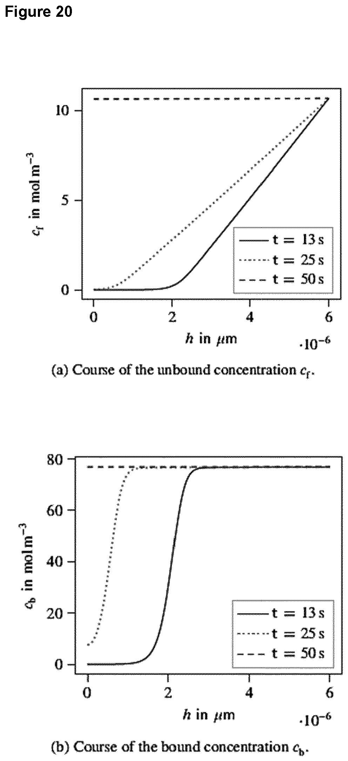

In the calculations based on the 2D mesh, see Figure 4, at each time step $c_b$ was averaged over the entire height of the symmetry axis of the nucleus. The resulting course of intensities is shown in Figure 10. The decision whether to use a 1D mesh or 2D mesh for test case A depends on whether more accurate results can be obtained with a 2D mesh than with a 1D mesh. For this the calculated staining is compared in terms of the three intensities $I_R$ $I_G$ $I_B$. The difference of the intensities of the 1D and 2D calculation, which is reached at the end of the simulated coloration at t = 5 min, is with maximum $\Delta I_R$ = 4.4 not so large that the use of a 2D mesh is necessary for the test case A. For comparison, two cuboids with the RGB values of the 1D and 2D calculation are shown in Figure 20 to demonstrate that the difference is not visible to the naked eye.

**Example 12:** Determination of the intensities of dye for the assumption of test case B

Since equation (5.17) has an analytical solution, the RGB intensities can be given directly. The result of the calculation is shown in Figure 11. The staining calculated by the reaction equation, using the same material parameters, is noticeably more intense than that calculated using the reaction-diffusion equation system. One reason for this is the assumption that the concentration of free dye in the tissue corresponds to the dye concentration in the dye basin and is constant over the height. This means that the average value does not have to be calculated over the height, as in test case A. In the reaction equation, the rate constant of the binding reaction $k_{on}$ is particularly decisive. If the same rate constant is used as for test case A, the result is the curve shown in Figure 11. The staining resulting from the intensities given therein is significantly darker than that calculated using the reaction-diffusion equation system. The reason for this becomes clear by considering the equation (5.13) used to estimate the magnitudes of the rate constants. For this, the assumption was made that diffusion is the time-limiting process and the binding reaction is much faster relative to diffusion. However, for test case B, the assumption is made that diffusion has no effect on the time course. The consequence of this is that the rate constant of the binding reaction is $k_{on}$ must be significantly lower than it is for test case A. The determination of a $k_{on}$ adapted to the experimental data is carried out in the further course of the work on the basis of the data of a real cut.

**Example 13:** Comparison the modelling with real results

Experimental Data:

For validation and comparison of the proposed model, histological slides, namely frozen sections of the liver, were stained with Mayer's hemalum for different staining times. Two individual slides were prepared for each of the six times, t = 0 s; 13 s; 25 s; 50 s; 100 s; 200 s. For simplicity, it was assumed that the staining within a nucleus is evenly distributed. Therefore, it is sufficient to determine the RGB intensities for the central point of the nuclei. For each time, one of the two prepared slides was selected. Three different sections, with a x200 magnification, were selected from this slide. Preliminary studies have shown that the magnification should not be too small. With a lower magnification, more cell nuclei can be considered, but as a consequence the number of pixels per nucleus is too low. To counteract this, x200 magnification is chosen. Additionally multiple sections are selected to determine the mean values of the RGB intensities for each staining time point. For these sections the geometry is approximated and after that, the central point of each cell nuclei can be determined. With the coordinates of the central points, the RGB intensities from the sections can be computed.

The binary mask stores the information which pixels belong to a nucleus and which do not. However, this mask may also contain artifacts in which only part of a nucleus was detected or a certain part of the cytoplasm fell into the class of nuclei. In order to filter out the incorrectly detected nuclei the area of each nucleus was computed. Afterwards only those "nuclei" whose area was greater than A = 12 $\mu$m2 were processed. The exact value used for the threshold of the area is not important. It could also be slightly lower or higher. The main reason for the need of a threshold value is just to filter out small artifacts that are clearly not nuclei or are parts of nuclei that come up by default when cutting tissue.

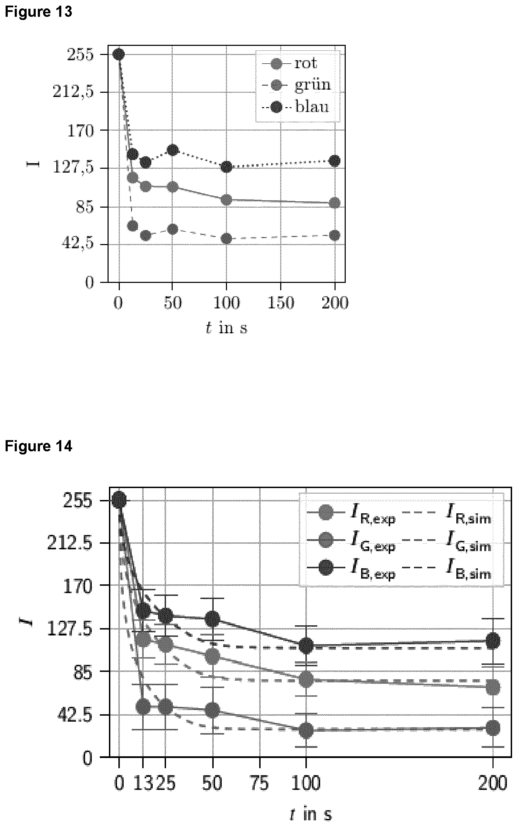

Figure 14 shows the result of combining the two procedures: (i) filtering out the artifacts and (ii) determining the RGB intensities via the central points of the nuclei. The results of three different sections are evaluated per staining time. The examined sections with a magnification of 200 contain approx. 800 nuclei. This means that in total approx. 2400 nuclei are evaluated per staining time.

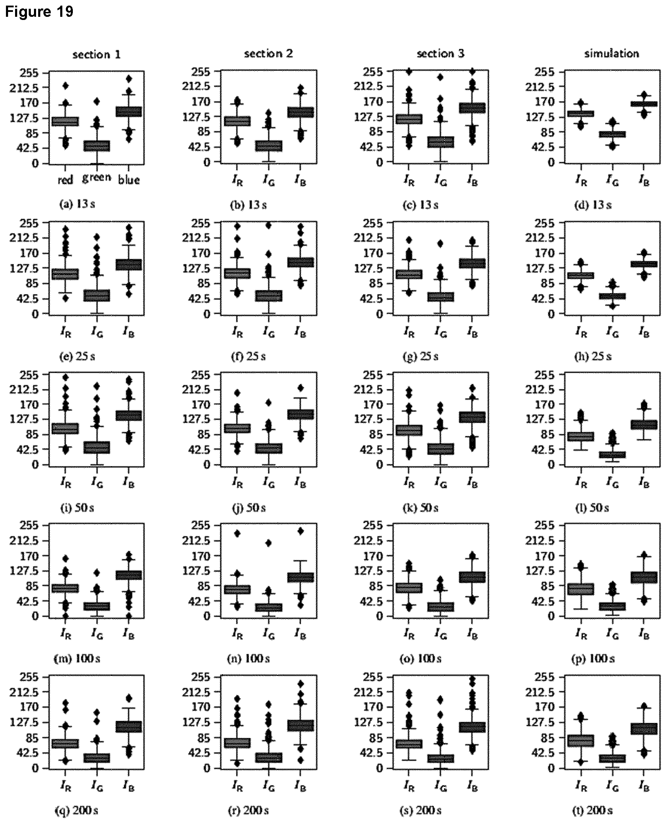

The error bars defined by the standard deviation are almost the same for each time and quite large. To give an overview of the variation in the RGB intensities which are computed by this method, box plots of the RGB intensities are shown in Figure 19. It can be observed that the number of outliers is quite different for the different sections. However, the number of outliers is quite small compared to the total values studied. The mean values are quite similar for all three sections (of the respective histological slide) per staining time.

In Figure 14 it can be seen that after a staining time of only t = 13 s the nuclei already have a very intense (i.e. dark) color. For longer staining times, the intensities are decreasing much slower and after t = 100 s they do not decrease anymore, see Figure 6. It can be concluded, that between $t$= 50 s and t = 100 s an equilibrium has been reached. The mean RGB intensities determined depend on which of the two slides is used for each stain.

The quality of the data can be improved by choosing more similar tissue samples. Another possibility is to remove the same tissue sample at different staining times, which is experimentally demanding. However, please note that this does not impact the simulation results, because only two individual slides are used for the fitting: The first one at t = 25 s (in disequilibrium) is used for the Diffusion coefficient and the rate constants, the second one (in equilibrium) at t = 100 s is used for the extinction coefficients as well as the maximal dye concentration, which the tissue can bind.

Workflow:

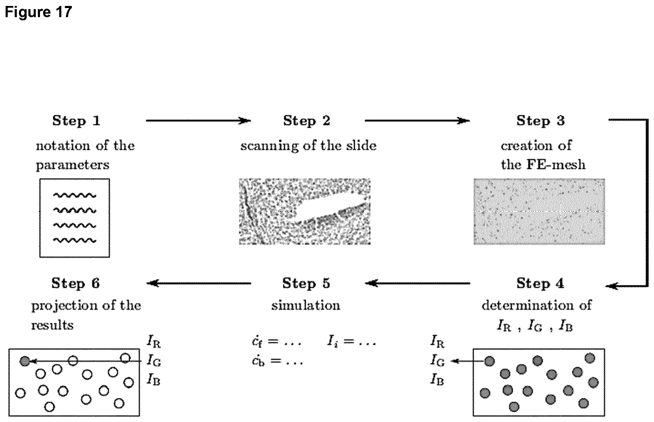

The typical workflow for performing a virtual staining is shown in Figure 17. First the parameters used for the creation of the histological slide, like the thickness of the slide and the used dye should be written down. After that, the already stained slide for which the staining with another dye or for another time span should be simulated is scanned. On the basis of this scanned slide a FE mesh is created, the description of this process. With that the geometry is determined. For each nuclei an individual $c_b^{max}$ is calculated. For that purpose, first the RGB intensities of each nucleus are determined. Subsequently, a series of test calculations were performed with the presented model, where different values for $c_b^{max}$ were given and the RGB intensities were calculated. This serves as a calibration series for the relationship between the local $c_b^{max}$ and the color intensity.

For the determination of the maximal number of binding sites it is important to use a stained slide. This is also the reason why for this model the starting point is a stained slide and not an unstained one. Another preference is that the dye with which the physical slide was stained and the dye with which the virtual staining has to be done, have the same binding sites. If a method is found to determine $c_b^{max}$ purely by geometrical features a virtual staining could also be done on the basis of an unstained slide.

The RGB intensities obtained by the test calculations are then combined with the respective concentration $c_b^{max}$ used as the material parameter to form an interpolation table. This allows the definition of $c_b^{max}$ based on a RGB intensity of a nucleus.

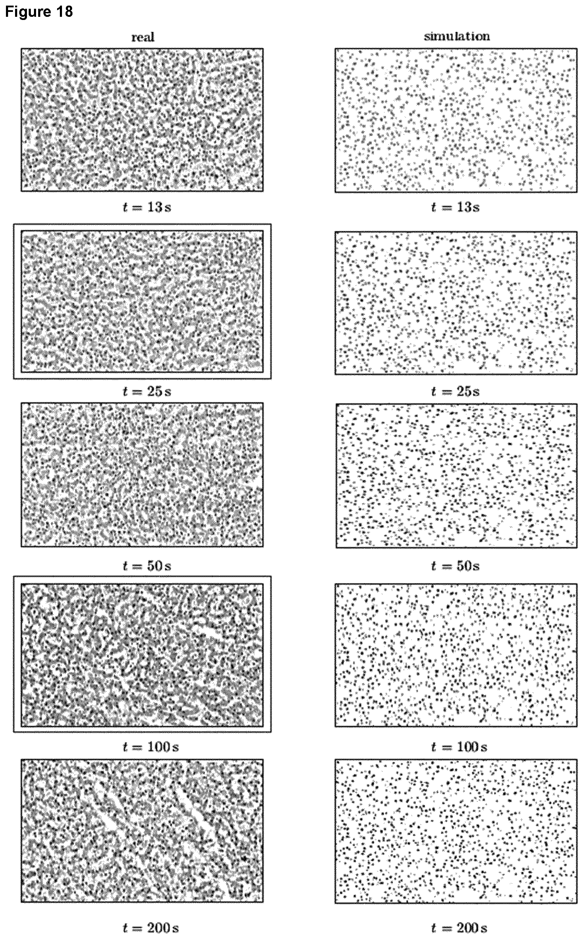

After that, the dye concentration can be computed with the equations 4.24 and the resulting staining with the equations 4.27-4.29 for each cell nuclei individually. Finally, the calculated RGB intensities can be projected onto the FE mesh generated in step 3. There the three intensities are combined together to form the respective color. The comparison between numerically simulated and scanned/measured color is shown in Figure 18 in the Appendix.

Results:

For the validation of the proposed model with the experimental data, the steps described in workflow are performed for a section of the slide which was stained for t = 100 s. With that the geometry and $c_b^{max}$ are fitted. The distribution of the free and bound dye concentration $c_f$ and $c_b$ is shown and described Figure 20.

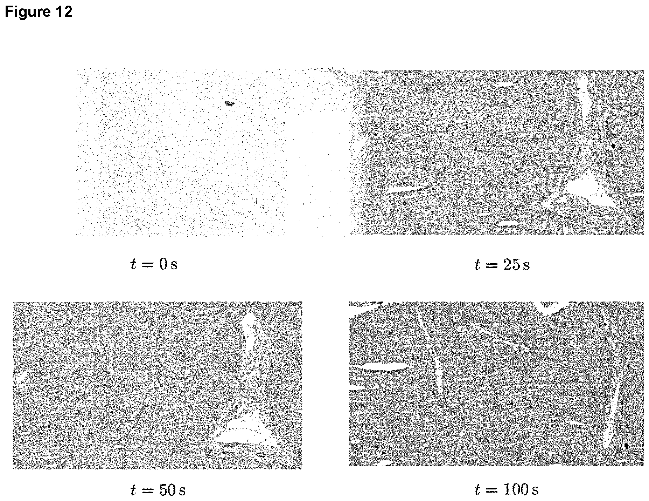

The RGB intensities were calculated for a staining time of 200 s. For the real, physical slides, a different slide was used for each staining time, cf. Figure 12. Therefore, it is not possible to directly compare the point-wise (or nucleus-wise) results of the projected RGB intensities with the real, physical sections. A visual comparison can only be done qualitatively. An evaluation of this will be done at the end of this section. For a quantitative comparison of the simulation with the experimental results, only a global comparison is possible. The assumption was made, that if the global comparison, that is over all the nuclei, is good, the local comparison for the single nuclei would also be good. For a global comparison, the average of the RGB intensities of all nuclei was taken for each simulated second. The simulation results are plotted together with the mean values and error bars of the experimental data versus time in Figure 8. The simulation results show a fast decrease of the RGB intensities in the first seconds with a subsequent approach to a final steady-state value (equilibrium value) which is unique for each color. After a staining time of t = 50 s the equilibrium seems to be reached. After a staining time of t = 42 s, 95 % of the maximal staining is achieved for the simulated data. For t = 25 s and t = 100 s the simulation and the experimental data agree excellently. This was to be expected, as the data of the experiments for this time was used to fit the material parameters used in the equations.

For the other times investigated, the simulation results are always inside the range spanned by the error bars with the exception of $I_G$ for t = 13 s and $I_B$ for t = 50 s. A possible factor for the deviation of the simulation from the experimental results is also due to the fact that the heights of the experimental histological slides could be different from the assumed h = 6 μm. Please note that h = 6 μm is the height set on the microtome. Since this is a highly precise work step on inhomogeneous (biological) material, variations in the cutting result are quite typical. Recording the actual section thickness after cutting would be one way of adding a correction factor. So far, this has not been possible in standardized applications.

Aside from this the results suggest that the proposed model is well suited to simulate the staining of histological slides. In Figure 19 in the Appendix on the right side of each row, the box plots of the simulated RGB intensities of the nuclei are depicted. The amount of outliers and their value is much lower than for the experimental data. It can be observed that for higher staining times the distribution of the RGB intensities is rising.

However, the goal of the proposed model is not to create a diagram like it can be seen in Figure 14 but to create 2D Images of a virtually stained histological slide that can be evaluated by a histologist or a machine learning algorithm for cancer detection. In Figure 18 the simulated staining is compared with sections from the experimental results for the different staining times. For comparison purposes, it should be noted that only the staining of the nuclei was simulated in the present work. In addition to the stained nuclei (darker purple), the experimental data also include sections of stained cytoplasm.

For the staining time of t = 13 s many of the virtual stained nuclei are not as intense as the experimental data. In Figure 14 this effect is also depicted. There, the results of the numerical simulation are located in the upper corner of the error bar. For the following times there is a better agreement between the virtual and the actual staining. The variety of intensities of the virtual stained nuclei is larger than in the experimental data, see Figure 18. Although this effect is enhanced by the white background for the simulation. This could be a sign that the process of choosing a $c_b^{max}$ for each nucleus should be improved. Overall, the difference between the simulated staining of the nuclei and the experimental data is within a tolerable range.

**Example 14:** Determination of material parameters

The material parameters used for the comparison and validation of the model proposed with the experimental data were calibrated from two of five different staining times, mentioned in section 1, with the exceptions of $I_{0,i}$ with $i = R, G, B$. With the assumption of white light passing through the slide, $I_{0,i}$ with $i = R;G;B$ can be set to $I_{0,i} = 255$. The applied material parameters are summarized in Table 1. During the fabrication of the histological section samples, the height of the slides was set to h = 6 $\mu$m. A combination of Merck's Mayer's hemalum and SAV's Mayer's hemalum with a mixing ratio of 1:2 in favor of SAV's hemalum recipe was used to stain the slides. The hematin and the mordant form a bond in a ratio of 1:1. Therefore the concentration of the hematin and the same amount of the mordant were summed with each other. This is done for the recipe of Merck and SAV. From the calculated values the weighted average is taken. The result is referred to as $\overline{c_f}$.

Because no rate constants were found in the literature concerning the binding and the release of hemalum to and from the tissue, two assumptions were made according to the literature. The first assumption is, that the diffusion is the time limiting process and the second one, that the dye release will be much slower than the binding. For the determination of the rate constants, following Fibich et al., the inequation

$$t_{\text{binding}} \ll t_{\text{diffusion}} \ll t_{\text{dye release}} \qquad (13)$$

was set up. For the binding time, the diffusion time and the dye release time the following equations

$$t_{\text{binding}} = (k_{\text{on}} c_{\text{b}}^{\text{max}})^{-1} \; ; \; t_{\text{diffusion}} = \frac{h^2}{2D} \; ;$$

$$t_{\text{dye release}} = k_{\text{off}}^{-1}$$

were used. The combination of these equations and the inequation (13) leads to the used inequation

$$\frac{k_{\text{off}}}{c_{\text{b}}^{\text{max}}} \ll \frac{2D}{h^2 c_{\text{b}}^{\text{max}}} \ll k_{\text{on}} \qquad (14)$$

for the determination of the rate constants. In order to achieve that $k_{on}$ is much larger and $k_{off}$ much smaller than $\frac{2D}{h^2 c_b^{max}}$ the resulting values are to be multiplied by a large value. In the present work $\frac{2D}{h^2 c_b^{max}}$ was multiplied by 500 in order to be physically consistent.

Note that the rate constants are no longer variable parameters, but depend on the diffusion coefficient D. $k_{on}$ depends also on the maximum number of binding sites $c_b^{max}$.

The result of staining the nuclei on a histologic slide can vary, with some nuclei being darker than others. A possible explanation for this could be the difference in volume of the nuclei. If the number of binding sites per nucleus is the same, a change in volume results in a change in concentration. Another reason which is especially important when dealing with tumors is the fact, that tumor cells in comparison to healthy cells, can have a different number of chromosomes or chromosome parts. For the staining with hemalum more chromosomes or more chromosome parts are equivalent to more binding sites and therefore a more intense staining is possible, depending on the used staining time. The amount of stain, which each nucleus can take up, determines how intense the virtual staining will be. To be able to consider this effect, each nucleus is assigned an individual maximal concentration of free binding sites $c_b^{max}$ for the dye. Therefore an approximation is needed for $c_b^{max}$. Thus the assumption was made, that the aluminum ions of the hemalum will bind to the phosphor atoms of the cell nuclei. The number of phosphor atoms were then estimated with the following consideration. In a nucleus are two sets of chromosomes. Each chromosome set is built up of 3:2 109 base pairs. A base pair consists of two nucleotides, which in turn consist, among other things, of a phosphate residue. This results in 1:28 1010 phosphor atoms in the DNA per nucleus and therefore 1:28 1010 free binding sites for the hemalum per nucleus. In order to obtain a concentration, the number of particles must be related to a volume. In this paper the assumption was made, that the nucleus has the shape of a sphere and that due to the high aluminum concentration used in the recipe for the hemalum, the dye molecules can bind to all binding sites, see section 2.4. For the diameter of the sphere d = 6 $\mu$m is chosen which leads to a concentration of $c_b^{max} = 187$ mol m³. Please note that the diameters can also be smaller than the thickness of the slide. However, to get a fix point it was assumed that most of the nuclei have a diameter which is approx. the height of the slide. The aluminum ions can bind to either one or two phosphor atoms. To consider this, $c_b^{max}$ was divided by the mean value, i.e. 1.5. Since a number of assumptions were made in determining $c_b^{max}$ such as the shape and size of the nuclei or the number of binding sites, a range of values were used for the test calculations, see Table 1. Due to the dependencies of $k_{on}$ on $c_b^{max}$, $k_{on}$ is also specified through a value range. The diffusion coefficient was fitted using the mean RGB intensities of the slide from the experiments which was stained for t = 25 s. Please note that the determination of the parameters can also be done at a different time. However, preliminary studies have shown that the best results can be acquired when using an early time, i.e. when the diffusion process is not yet completed.

The extinction coefficients were fitted using the mean RGB intensities from the experiments for the slide which was stained for t = 100 s. At this point in time the staining is completed, cf. Figure 14 and therefore the assumption was made, that the concentration of bound dye $c_b$ is equivalent to the maximum concentration of free binding sites $c_b^{max}$. Following that, Lambert-Beer's Law was converted to the extinction coefficients $\varepsilon_i$ for i = R, G, B. With the analytically determined in a solution work. $c_b^{max}$, the height of the slide h and the mean RGB intensities, all unknowns are determined. Please note that the thereby determined values of " are smaller than the values for" according to Bettinger and Zimmermann. They specify a maximal molar extinction coefficient as well as a curve for the extinction over the wavelength for multiple hemalum concentrations with different preparation steps. One explanation for the differences could lie in the fact that the maximal molar extinction coefficient was measured.

For the calibration of the material parameters the data from two staining times were used. At t = 25 s the equilibrium has not been reached yet and the dynamic parameters can be fitted. In the current work these parameters are the diffusion coefficient D and also to a certain extend the rate constants $k_{on}$ and $k_{off}$ via in equation (14). However, this procedure is only needed because the authors are not aware of any reliable sources for these parameters. The same applies for the extinction coefficients. If these parameters are all determined through independent experiments, the remaining material parameter which has to be determined is $c_b^{max}$. It is important to perform this with a slide where the equilibrium (end-state) of the staining is achieved. If the parameter is fitted at e.g. t = 25 s the resulting $c_b^{max}$ would not be the actual maximal concentration of binding sites. This would only make sense if the staining would normally be stopped at this point because the desired staining has been reached. The physical meaning of $c_b^{max}$ would then change from the (total) maximal concentration of binding sites to the maximal concentration of binding sites needed to achieve the desired staining.

The maximal concentration of free binding sites $c_b^{max}$ together with the extinction coefficients $\varepsilon_i$ for $i = R;G;B$ are the parameters, which determine the resulting stain. While the extinction coefficients are the same for the whole slide $c_b^{max}$ can vary for the nuclei, depending on their size.

Conclusions:

With the present invention, by way of example, a model and procedure capable of performing virtual staining of cell nuclei and other tissue regions for histological slides is presented. For this purpose, the transport and binding of the dye concentration was computed using a one-dimensional FE simulation. Subsequently, the resulting RGB intensities were determined. These intensities were projected onto a two-dimensional mesh based on a scanned histological slide for which the result of the virtual staining is of interest. If the used material parameters are fitted with the data from two different points in time, the obtained curve lies generally within the range spanned by the error bars. This means that the model is able to accurately simulate the staining of the nuclei with hemalum over time.

With this model, the user can virtually (re-)stain cell nuclei of a histological section with the same or another dye. For sections that are of interest, the course of the RGB intensities at different points in time can be visualized. For that the geometry of the nuclei is approximated. Often a tumor cell is not/not only characterized by a different staining intensity then a healthy cell but by a larger diameter. This larger diameter is detected by the model and the pathologist or the artificial intelligence model analyzing the virtual staining perceives this and can make a decision.

With the proposed model, the present invention lays the foundation for a histological analysis that can be adapted to the personal habits/experiences of the histologists. It also allows the generation of a much wider variety of training data sets for machine learning methods due to the possibility of standardization of the images.

**Literature**

[1] Leading causes of death in Europe: fact sheet. https: //www. euro.who.int/en/ data-and-evidence/european-health-report/european-health-report-2012/ fact-sheets/fact-sheet-leading-causes-of-death-in-europe. Retrieved Feb. 16, 2021.

[2] AIGNER, K. R., and STEPHENS, F. O.. Oncology basic knowledge. Springer-Verlag, 2016.

[3] JONES, T. L., BYRNES, T. J., YANG, G., HOWE, F. A., BELL, B. A., and BARRICK, T. R. Brain tumor classification using the diffusion tensor image segmentation (D-SEG) technique. Neuro-oncology 17.3, 2015, pp. 466-476.

[4] FALK, M., YNNERMAN, A., TREANOR, D., and LUNDSTROM, C. Interactive visualization of 3D histopathology in native resolution. IEEE transactions on visualization and computer graphics 25.1, 2018, pp. 1008-1017.

[5] VEUTHEY, T., HERRERA, G. and DODERO, V. I. Dyes and stains: From molecular structure to histological application. Frontiers in Bioscience 19.1, 2014, pp. 91-112.

[6] HIDDEMANN, W. and BARTRAM, C. R. Oncology. 2nd ed. Springer-Verlag, 2010.

[7] GIULIANO, A. E. et al. Axillary dissection vs no axillary dissection in women with invasive breast cancer and sentinel node metastasis: A randomized clinical trial. Jama 305.6, 2011, pp. 569-575.

[8] DONG, H., YANG, G., LIU, F., MO, Y., and GUO, Y. "Automatic brain tumor detection and segmentation using U-Net based fully convolutional networks." annual conference on medical image understanding and analysis. Springer. 2017, S. 506-517.

[9] LANG, G. Histotechnik: Praxislehrbuch für die biomedizinische Analytik. Springer-Verlag, 2006.

[10] BANCROFT, J. D. and GAMBLE, M. Theory and practice of histological techniques. 8th ed. Elsevier health sciences, 2019.

[11] MULISCH, M. and WELSCH, U. Romeis-Mikroskopische Technik. 18th ed. Springer-Verlag, 2010.

[12] GIBBS, S. L. et al. Near-infrared fluorescent digital pathology for the automation of disease diagnosis and biomarker assessment. Molecular imaging 14.5, 2015,

[13] WINZEK, C and BAUMGARTEL, H. Staining kinetics in single cells. Part II. Diffusion processes inside the cell. Histochemistry 90.1, 1988, pp. 79-83.

[14] SIEDEL, I and ZIMMERMANN, H. Relaxation technique for kinetic measurements of dye accumulation at the mitochondria of HeLa cells in situ. Journal of Photochemistry and Photobiology B: Biology 27.3, 1995, pp. 233-242.

[15] SCHIEBLER, T. H. and KORF, H.-W. Anatomy: histology, developmental history, macroscopic and microscopic anatomy, topography. Springer-Verlag, 2007.

[16] WELSCH, U. Textbook Histology. Cytology, histology, microscopic anatomy. 1 st ed. Elsevier GmbH, Munich, 2003.

[17] LINß, W. and FANGHANEL, J. Histology: cytology, general histology, microscopic - anatomy. Walter de Gruyter, 1999.

[18] SADAVA, D., HILLIS, D. M., HELLER, H. C., and HACKER, S. D. Purves Biology. 10th ed. Springer-Verlag, 2019.

[19] BUSELMAIER, W. Biology for Physicians. 12th ed. Springer, Berlin Heidelberg, 2012.

[20] HARTMANN, M., PABST, M. A., SCHMIED, R., CALUBA, H.-C. and DOHR, G. Cytology, Histology and Microscopic Anatomy. Vol. 3. Facultas Verlags- und Buchhandels AG, 2005.

[21] MASUHR, K. F. and NEUMANN, M. Dual series-neurology. 6th ed. Thieme Verlag, 2007.

[22] BEJNORDI, B. E., LITJENS, G., TIMOFEEVA, N., OTTE-HÖLLER, I., HOMEYER, A., KARSSEMEIJER, N., and LAAK, J. A. van der. Stain specific standardization of whole-slide histopathological images. IEEE transactions on medical imaging 35.2, 2015, pp. 404-415.

[23] SHARMA, K., KAUR, A., and GUJRAL, S. Brain tumor detection based on machi-ne learning algorithms. International Journal of Computer Applications 103.1, 2014, pp. 7-11.

[24] ARI, A. and HANBAY, D. Deep learning based brain tumor classification and detection system. Turkish Journal of Electrical Engineering & Computer Sciences 26.5, 2018, pp. 2275-2286.

[25] KATHER, J. N. et al. Deep learning can predict microsatellite instability directly from histology in gastrointestinal cancer. Nature medicine 25.7, 2019, pp. 1054-1056.

[26] TAYLOR-KING, J. P., BARATCHART, E., DHAWAN, A., COKER, E. A., RYE, I. H., RUSSNES, H., CHAPMAN, S. J., BASANTA, D., and MARUSYK, A. Simulated ablation for detection of cells impacting paracrine signaling in histology analysis. Mathematical medicine and biology: a journal of the IMA 36.1, 2019, pp. 93-112.

[27] BETTINGER, C. and ZIMMERMANN, H. New investigations on hematoxylin, hematein, and hematein-aluminum complexes. II. Hematein-aluminum complexes and hema-lum staining. Histochemistry 96.3, 1991, pp. 215-228.

[28] CEA, M. V. S. de and NIE, Y. "Single stain normalization for IHC whole slide images." Medical Imaging 2018: Digital Pathology. Vol. 10581. international society for optics and photonics. 2018, S. 1058104.

[29] EBERLIN, L. S., LIu, X., FERREIRA, C. R., SANTAGATA, S., AGAR, N. Y., and COOKS, R. G. Desorption electrospray ionization then MALDI mass spectrometry imaging of lipid and protein distributions in single tissue sections. Analytical chemistry 83.22, 2011, pp. 8366-8371.

[30] Brochure Tissue-Tek Prisma Plus & Tissue-Tek Film (EN). https ://www. sakura. eu / en / Solutions / Staining-Coverslipping / Tissue- Tek- Prisma- Plus- Film. Retrieved Feb. 12, 2021.

[31] LLEwELLYN, B. Nuclear staining with alum hematoxylin. Biotechnic & Histoche-mistry 84.4, 2009, pp. 159-177.

[32] PRENTØ, P. Staining of macromolecules: possible mechanisms and examples. Biotechnic & Histochemistry 84.4, 2009, pp. 139-158.

[33] PRENTØ, P. A contribution to the theory of biological staining based on the principles for structural organization of biological macromolecules. Biotechnic & Histochemistry 76.3, 2001, pp. 137-161.

[34] BRuNT, E. et al. cHCC-CCA: Consensus terminology for primary liver carcinomas with both hepatocytic and cholangiocytic differentiation. Hepatology 68.1, 2018, pp. 113-126.

[35] COx, C. E. et al. Guidelines for sentinel node biopsy and lymphatic mapping of patients with breast cancer.... Annals of surgery 227.5, 1998, p. 645.

[36] REGEV, A., BERHO, M., JEFFERS, L. J., MILIKOwSKI, C., MOLINA, E. G., PYRSO-POuLOS, N. T., FENG, Z.-Z., REDDY, K. R., and SCHIFF, E. R. Sampling error and intraobserver variation in liver biopsy in patients with chronic HCV infection. The American journal of gastroenterology 97.10, 2002, pp. 2614-2618.

[37] LI, Z., Gu, X., LOu, S., and ZHENG, Y. The development of binary Mg-Ca alloys for use as biodegradable materials within bone. Biomaterials 29.10, 2008, pp. 1329-1344.

[38] 109249 Mayers hemalum solution for microscopy. https://www.merckmillipore. com/EN/product/Mayers-hema-lum- solution, MDA_CHEM- 109249. Retrieved Feb. 12, 2021.

[39] GOLDSTEIN, D. A microdensitometric method for the analysis of staining kinetics. Journal of microscopy 119.3, 1980, pp. 331-343.

[40] HOLLON, T. C. et al. Near real-time intraoperative brain tumor diagnosis using stimulated Raman histology and deep neural networks. Nature medicine 26.1, 2020, pp. 52- 58.

[41] ORRINGER, D. A. et al. Rapid intraoperative histology of unprocessed surgical specimens via fiber-laser-based stimulated Raman scattering microscopy. Nature biomedical engineering 1.2, 2017, p. 0027.

[42] IRION, G, OCHSENFELD, L, NAUJOK, A and ZIMMERMANN, H. The concentration jump method. Histochemistry 99.1, 1993, pp. 75-83.

[43] WINZEK, C, PLIENINGER, P and BAUMGARTEL, H. An improved method to investi-gate staining kinetics in single cells. Histochemistry 86.4, 1987, pp. 421-426.

[44] REDDY, M., LEE, G., MCGREGOR, R., and JASPER, W. "Modeling of the batch dyeing process." Proceedings of 1995 American Control Conference-ACC'95. vol. 3. IEEE. 1995, S. 2180-2184.

[45] SOUZA, S. M. G. U. de, SOUZA, D. P. de, SILVA, E. A. B. da and SOUZA, A. A. U. de. Modelling of the dyeing process of packed cotton threads using reactive dyes. Transport in porous media 68.3, 2007, pp. 341-363.

[46] LIN, S. Concentration-dependent diffusion of dye in reactive dyeing systems. Journal of applied polymer science 44.10, 1992, pp. 1743-1749.

[47] GOLDSTEIN, D. An approach to the thermodynamics of histological dyeing, illustrated by experiments with azure A. Journal of Cell Science 3.68, 1963, pp. 413-439.

[48] ALTENBACH, H. Continuum mechanics. Vol. 4. Springer-Verlag Berlin Heidelberg, 2018.

[49] SOBCZYK, M. Modeling and simulation of hydrogels and hydrogel-based layered systems. Diss. Dresden University of Technology, 2018.

[50] NICHOLSON, C. Diffusion and related transport mechanisms in brain tissue. Reports on Progress in Physics 64, 2001, pp. 815-884.

[51] MÜNSTER, A. F.. Simulation of stationary chemical patterns and waves in ionic reactions. Discrete & Continuous Dynamical Systems-B 2.1, 2002, pp. 35-46.

[52] PARKE, W. C. Biophysics. Springer, 2020.

[53] CRANK, J. The mathematics of diffusion. 2nd ed. Oxford university press, 1979.

[54] PARK, J. W., NA, S. C., LEE, Y., LEE, S., PARK, S. B., and JEON, N. L. Measurement of lipid droplet accumulation kinetics in Chlamydomonas reinhardtii using seoul-fluor. Energies 6.11, 2013, pp. 5703-5716.

[55] JAIN, R. K. Transport of molecules in the tumor interstitium: A review. Cancer research 47.12, 1987, pp. 3039-3051.

[56] FERUS-COMELO, M. Control of the adsorption of dyes on cotton. Diss. University of Leeds, 2002.

[57] HAMANN, C. H., HOOGESTRAAT, D. and KOCH, R. Grundlagen Der Kinetik. -Springer, 2017.

[58] LECHNER, M. D. Introduction to The Kinetics. Springer, 2018.

[59] KIM, J., WHITE, K. S., and WINFREE, E. Construction of an in vitro bistable circuit from synthetic transcriptional switches. Molecular systems biology 2.1, 2006, 68-79.

[60] TARTAKOvSKY, D. M. and DENTZ, M. Diffusion in porous media: Phenomena and Mechanisms. Transport in Porous Media 130.1, 2019, pp. 105-127.

[61] VENDEL, E., ROTTSCHAFER, V. and LANGE, E. C. de. Improving the prediction of local drug distribution profiles in the brain with a new 2D mathematical model. Bulletin of mathematical biology 81.9, 2019, pp. 3477-3507.

[62] FIBICH, G, HAMMER, A, GANNOT, G, GANDJBAKHCHE, A, and GANNOT, I. Mode-ling and simulations of the pharmacokinetics of fluorophore conjugated antibodies in tumor vicinity for the optimization of fluorescence-based optical imaging. Lasers in Surgery and Medicine: The Official Journal of the American Society for Laser Medi-cine and Surgery 37.2, 2005, pp. 155-160.

[63] TAKAMATSU, H. and RUBINSKY, B. Viability of deformed cells. Cryobiology 39.3, 1999, pp. 243-251.

[64] EHRENHOFER, A. Modeling and simulation of the behavior of flow-through switchable membranes. Diss. Technische Universität Dresden, 2018.

[65] SYKOvá, E. and NICHOLSON, C. Diffusion in brain extracellular space. Physiological reviews 88.4, 2008, pp. 1277-1340.

[66] RUIFROK, A. C., JOHNSTON, D. A. et al. Quantification of histochemical staining by color deconvolution. Analytical and quantitative cytology and histology 23.4, 2001, pp. 291-299.

[67] GAvRILOvIC, M., AZAR, J. C., LINDBLAD, J., WAHLBY, C., BENGTSSON, E., BUSCH, C., and CARLBOM, I. B. Blind color decomposition of histological images. IEEE tran-sactions on medical imaging 32.6, 2013, pp. 983-994.

[68] KUMAR, V. and GILL, K. D. "Photometry: Colorimeter and spectrophotometer". Ba-sic concepts in clinical biochemistry: a practical guide. Springer, 2018, pp. 17-20.

[69] LAAK, J. A. Van der, PAHLPLATZ, M. M., HANSELAAR, A. G. and WILDE, P. C. de. Hue-saturation-density (HSD) model for stain recognition in digital images from transmitted light microscopy. Cytometry: The Journal of the International Society for Analytical Cytology 39.4, 2000, pp. 275-284.

[70] BETTINGER, C. and ZIMMERMANN, H. New investigations on hematoxylin, hematein, and hematein-aluminum complexes. I. Spectroscopic and physico-chemical properties of hematoxylin and hematein. Histochemistry 95.3, 1991, pp. 279-288.

[71] GRESSNER, A. M. and ARNDT, T. Encyclopedia of medical laboratory diagnostics¬. Springer-Verlag, 2019.

[72] HARTEN, U. Physics for physicians: an introduction. Springer-Verlag, 2006.

[73] MAYERHÖFER, T. G. and POPP, J. Beer's Law-Why Absorbance Depends (Almost) Linearly on Concentration. ChemPhysChem 20.4, 2019, pp. 511-515.

[74] ALNæS, M. S. et al. The FEniCS Project Version 1.5. Archives of Numerical Software 3.100, 2015, pp. 9-23.

[75] ZIENKIEWICZ, O. C., TAYLOR, R. L. and ZHU, J. Z. The Finite Element Method: Its basis and fundamentals. 6th ed. Elsevier, 2005.

[76] LANGTANGEN, H. P., LOGG, A. and TVEITO, A. Solving PDEs in Python: The FE-niCS Tutorial I. Springer International Publishing, 2016.

[77] SCHÜNKE, M., SCHULTE, E. and SCHUMACHER, U. Prometheus Learning Atlas of Anatomy¬. Head and neuroanatomy. Georg Thieme Verlag KG, Stuttgart, 2006.

[78] DAPSON, R. Dye-tissue interactions: mechanisms, quantification and bonding parameters for dyes used in biological staining. Biotechnic & Histochemistry 80.2, 2005, pp. 49-72.

[79] HAKUMÄKI, J. M., POPTANI, H., PUUMALAINEN, A.-M., LOIMAS, S., PALJARVI, L. A., YLA-HERTTUALA, S., and KAUPPINEN, R. A. Quantitative 1H nuclear ma-gnetic resonance diffusion spectroscopy of BT4C rat glioma during thymidine kinase-mediated gene therapy in vivo: identification of apoptotic response. Cancer research 58.17, 1998, pp. 3791-3799.

[80] IUPAC, I. Compendium of chemical terminology. 1997.

[81] LABKEM. Hematoxylin, C.I. 75290 For Microscopical Staining Safety Data Sheet.

[82] MERCK. SAFETY DATA SHEET according to Regulation (EC) No. 1907/2006 ¬Article number 111487 Article name Hematein (C.I. 75290) for microscopy.

[83] GMBH, S. L. EU SAFETY DATA SHEET Hematoxilin, acidic according to Mayer.

[84] Hematoxylin. https : / / www . chemicalbook . com/ ChemicalProductProperty_ EN_ CB1382426.htm. Retrieved 2020-12-30.

[85] BOCKLER, F. et al. ROMPP (Online) Alum, RD-01-01290. https://roempp.thieme. de/lexicon/RD-01-01290 Retrieved 03/21/2021.

[86] FUSHIMI, K. and VERKMAN, A. Low viscosity in the aqueous domain of cell cytoplasm measured by picosecond polarization microfluorimetry. The Journal of cell biology 112.4, 1991, pp. 719-725.

[87] LANG, I., SCHOLZ, M., and PETERS, R. Molecular mobility and nucleocytoplasmic flux in hepatoma cells.... The Journal of cell biology 102.4, 1986, pp. 1183-1190.

[88] ROGERS, S. S., WAIGH, T. A., and LU, J. R. Intracellular microrheology of motile Amoeba proteus. Biophysical journal 94.8, 2008, pp. 3313-3322.

[89] KAO, H. P., ABNEY, J. R., and VERKMAN, A. Determinants of the translational mobility of a small solute in cell cytoplasm.... The Journal of cell biology 120.1, 1993, pp. 175-184.

[90] BICKNESE, S, PERIASAMY, N, SHOHET, S. and VERKMAN, A. Cytoplasmic viscosity near the cell plasma membrane: measurement by evanescent field frequency-domain microfluorimetry. Biophysical journal 65.3, 1993, pp. 1272-1282.

[91] ZIDOvSKA, A. The rich inner life of the cell nucleus: dynamic organization, active flows, and emergent rheology.

Biophysical Reviews, 2020, pp. 1-14.

[92] CARAGINE, C. M., HALEY, S. C., and ZIDOvSKA, A. Surface fluctuations and coalescence of nucleolar droplets in the human cell nucleus. Physical review letters 121.14, 2018, pp. 148101.

[93] TSENG, Y., LEE, J. S., KOLE, T. P., JIANG, I., and WIRTZ, D. Micro-organization and visco-elasticity of the interphase nucleus revealed by particle nanotracking. Journal of cell science 117.10, 2004, pp. 2159-2167.

[94] BAEHR, H. D. and STEPHAN, K. Heat and Mass Transfer. Vol. 10. Springer Vieweg, 2019.

[95] RASSOw, J., HAUSER, K., NETZKER, R. and DEUTZMANN, R. Duale Reihe Biochemie¬. Vol. 3. Thieme, 2012.

[96] GEUZAINE, C. and REMACLE, J.-F. Gmsh: A 3-D finite element mesh generator with built-in pre-and post-processing facilities. International journal for numerical methods in engineering 79.11, 2009, pp. 1309-1331.

[97] SCHINDELIN, J. et al. Fiji: an open-source platform for biological-image analysis. Nature methods 9.7, 2012, pp. 676-682.

[98] ARGANDA-CARRERAS, I., KAYNIG, V., RUEDEN, C., ELICEIRI, K. W., SCHINDE-LIN, J., CARDONA, A., and SEBASTIAN SEUNG, H. Trainable Weka Segmentation: a machine learning tool for microscopy pixel classification. Bioinformatics 33.15, 2017, pp. 2424-2426.

[99] KROON, D.-J. Isocontour. https://www.mathworks.com/matlabcentral/fileexchange/ 30525-isocontour. MATLAB Central File Exchange. Retrieved February 2, 2021.

[100] MARTIN, H. Numerical flow simulation in hydrodynamics: fundamentals and methods. Springer-Verlag, 2011.

[101] MOLLS, M., ANSCHER, M.S., NIEDER, C., and VAUPEL, P. The impact of tumor biology on cancer treatment and multidisciplinary strategies. Springer, 2009.

[102] WITTENBORN, T. R., NIELSEN, T., THOMSEN, J. S., HORSMAN, M. R., and NY-GAARD, J. V. Simulation of heterogeneous molecular delivery in tumors using $\mu$CT reconstructions and MRI validation. Microvascular Research 108, 2016, pp. 69-74.

[103] JANSEN, I., LUCAS, M., SAVCI-HEIJINK, C. D., MEIJER, S. L., LIEM, E. I., BOER, O. J. de, LEEUWEN, T. G. van, MARQUERING, H. A., and BRUIN, D. M. de. Three-dimensional histopathological reconstruction of bladder tumors. Diagnostic pathology 14.1, 2019, pp. 1-7.

[104] ZHANG, F. et al. Controlling adsorption structure of eosin Y dye on nanocrystalline TiO2 films for improved photovoltaic performances. The Journal of Physical Che-mistry C 117.28, 2013, pp. 14659-14666.

[105] AHRENS, J., GEVECI, B. and LAW, C. Paraview: An end-user tool for large data visualization. The visualization handbook 717.8, 2005,

**Abbreviations**

| Symbol | unit | Meaning |
|---|---|---|
| $\nabla(\cdot)$ | | Gradient of a quantity |
| $\nabla\cdot(\cdot)$ | | Divergence of a quantity |
| $\dfrac{\partial(\cdot)}{\partial x}$ | | Partial derivative of a quantity according to location |
| $\dfrac{\partial(\cdot)}{\partial t}$ | | Partial derivative of a quantity according to time |
| a | | Scalar size |

(continued)

| Symbol | unit | Meaning |
|---|---|---|
| a | | Vector quantity |
| $(\dot{\cdot})$ | | Time derivative of a quantity |
| $c_{fiber}$ | mol m$^{-3}$ | Dye concentration in the fiber |
| $c_{fiber}^{max}$ | mol m$^{-3}$ | Maximum dye concentration in the fiber |
| $c_{Bad}$ | mol m$^{-3}$ | Dye concentration in the solution |
| $c_s$ | mol m$^{-3}$ | Dye concentration of binding sites in the fiber |
| $c_a$ | mol m$^{-3}$ | Dye concentration in the fluid phase |
| D | m$^2$ s$^{-1}$ | Diffusion coefficient |
| $D_{eff}$ | m$^2$ s$^{-1}$ | Effective diffusion coefficient for porous material |
| $K_h$ | s$^{-1}$ | Rate constant of hydrolysis |
| s | m$^3$ mol$^{-1}$ s$^{-1}$ | Stoichiometric coefficient for reaction between fiber and dye |
| $k_{on}$ | m$^3$ mol$^{-1}$ s$^{-1}$ | Rate constant of binding reaction |
| $k_{off}$ | s$^{-1}$ | Rate constant of reaction in solution |
| v | m s$^{-1}$ | Velocity |
| m | kg | Mass |
| A | m$^2$ | Surface |
| V | m$^3$ | volume |
| J | mol s$^{-1}$ m$^{-2}$ | Flux term |
| $J_{diff}$ | mol s$^{-1}$ m$^{-2}$ | Diffusion flux term |
| $c_b^{max}$ | kg m$^{-3}$ s$^{-1}$ | Source term of density |
| $\hat{r}_i$ | mol m$^{-3}$ s$^{-1}$ | Source term of concentration |
| M | kg mol$^{-1}$ | Molar mass |
| v | kg mol$^{-1}$ | Molar volume |
| c | mol m$^{-3}$ | Molar concentration |
| $\hat{c}$ | mol m$^{-3}$ | Mass concentration |
| $\tilde{c}$ | mol m$^{-3}$ | Particle concentration |
| $c_f$ | mol m$^{-3}$ | Concentration of free, unbound dye molecule |
| $c_b$ | mol m$^{-3}$ | Concentration of bound dye molecules |
| $\hat{r}_\rho^i$ | mol m$^{-3}$ | Maximum concentration of bound dye molecules |
| l | W m$^{-2}$ | Intensity of light |
| $l_0$ | W m$^{-2}$ | Intensity of incident light |
| h | $\mu$m | Thickness of section |
| E | - | Extinction |
| n | - | Normal vector |
| $k_B$ | J K$^{-1}$ | Boltzmann constant |
| T | K | Temperature |
| r | nm | Hydrodynamic radius of the diffusion particle |
| $N_A$ | mol$^{-1}$ | Avogadro-constant |
| t | s | Time |
| $\rho$ | Kg m$^{-3}$ | Density |
| $\varphi$ | - | Porosity |
| $\lambda_{poro}$ | - | Tortuosity |
| $\lambda$ | nm | Wavelength of the light |
| $\varepsilon$ | m$^2$ mol$^{-1}$ | Extinction coefficient |
| $\Omega$ | - | Area |
| $\partial\Omega$ | - | Edge of the area |

(continued)

| Symbol | unit | Meaning |
|---|---|---|
| $\eta$ | Pa s | Dynamic viscosity |
| $(\cdot)_i$ | | Running index, if a body is composed of several components |
| $(\cdot)_f$ | | Free, unbound dye |
| $(\cdot)_b$ | | Bound dye |
| + | | Positive charge |
| $(\cdot)_R$ | | Red |
| $(\cdot)_G$ | | Green |
| $(\cdot)_B$ | | Blue |
| IHC | | |
| FEM | | Finite element method |
| FDM | | Finite element method |
| FE Mesh | | Finite element mesh |
| BC | | Boundary condition |

**Claims**

1. A method for simulating and predicting a histological staining of a tissue section, comprising:

   - generating a geometric model of a tissue section, and
   - modelling and simulating one or more dyes in said tissue section.

2. The method according to claim 1, comprising:

   a. obtaining at least one image of a tissue section,
   b. generating a geometric model of the image, wherein the geometric model comprises:

   i. one or more locations of a nuclear region and/or cytoplasmic region of each cell, interstitial regions and empty regions in the image, and
   ii. a signal intensity of the nuclear regions and/or other regions, and
   iii. material parameters,

   c. modelling and simulating the transport and binding of one or more dyes in the tissue section, comprising determining a simulated quantity of dye that binds to each nuclear region and/or other regions of the tissue section ($c_b$), and
   d. projecting the color intensities ($I_R$ $I_G$ $I_B$) of each nuclear region and/or other regions of the geometric model, wherein the intensities ($I_R$ $I_G$ $I_B$) of each nuclear region and/or other regions are determined by an absorptive and/or reflective property of the dye, such as according to the Lamber-Beer law.

3. The method according to any one of the preceding claims, wherein the geometric model is a two-dimensional (2D) model.

4. The method according to any one of claims 2-3, wherein the material parameters comprise one or more of staining time, tissue section thickness and/or type of preparation of tissue section, such as a frozen tissue section or paraffin embedded tissue section, a maximum value for dye binding to the tissue section, a concentration of a dye, and a maximum number of dye binding sites in the tissue section.

5. The method according to any one of claims 2-4, wherein the material parameters (optionally additionally) comprise one or more of a coefficient of diffusion for the dye, a rate constant, such as a rate constant of a binding reaction and/or a rate constant of a backward reaction, an extinction coefficient for red, green and/or blue dye, and/or an intensity of incident red, green and/or blue light.

6. The method according to any one of claims 2-5, wherein at least the parameters of dye, staining time and thickness of the tissue section are recorded, and wherein the material parameters are calibrated with the at least one image of the tissue section.

7. The method according to any one of claims 2-6, wherein the at least one image of the tissue section is selected from:

a. an image of the section without staining,
b. an image of the section obtained after staining with a dye, or
c. a first image of the section obtained after staining with a dye at a first time point and a second image obtained after staining with the same dye at a later second time point.

8. The method according to any one of claims 2-7, wherein the geometric model comprises a finite element mesh generated from an image of the tissue section, wherein generating a finite element mesh comprises:

a. generating a binary mask of the image of the tissue section, wherein nuclear, and/or other regions are distinguishable, preferably wherein nuclear regions, cytoplasmatic regions, interstitial regions and empty regions are distinguishable;
b. generating a geometric model based on the mask; and
c. generating a finite-element or finite-volume mesh for the geometric model.

9. The method according to any one of the preceding claims, wherein the modelling and simulating of a dye comprises simulating one or more of interstitial dye diffusion within the tissue section, dye diffusion across a cell membrane, intracytoplasmic dye diffusion, from a cytoplasm to a nucleus, dye diffusion through a nucleus and/or dye diffusion to a binding site within the nucleus and/or other regions.

10. The method according to any one of the preceding claims, wherein the modelling of a dye comprises a diffusion-reaction equation and a reaction equation, wherein the diffusion-reaction equation and a reaction equation are coupled.

11. The method according to any one of the preceding claims, further comprising equations for absorption and/or reflection and/or emission of light, such as visible light.

12. The method according to any one of the preceding claims, wherein the modelling of a dye is numerically implemented with a simulation method, such as finite element method (FEM), finite difference method (FDM) and/or finite volume method (FVM).

13. The method according to the preceding claim, wherein the numerical implementation of the modelling of a dye comprises generalization of the diffusion-reaction equation and the reaction equation, determination of the material parameters and a time discretization of the mass balance law of a concentration of free dye, and a concentration of dye which binds to the tissue, wherein preferably the time discretization is applied with a finite-difference-method, wherein each time step is calculated successively.

14. A system for simulating a histological staining of a tissue section, comprising:

a. a data store used to contain one or more material parameters and geometry parameters, and
b. a software for analyzing tissue section images, generating a geometric model, generating a finite-element-mesh, and modelling and simulating the transport of a dye,
c. wherein the software is configured for simulating a histological, histochemical or immunohistochemical staining of a tissue section according to the method of any one of the preceding claims.

15. A method for diagnosing a disease, comprising:

a. preparing and analyzing one or more tissue sections of a tissue sample obtained from a subject,
b. simulating the histological staining of the tissue section according to the method or the system of any one of the claims 1-14, and
c. evaluating the simulation, for example by using a machine learning model that is trained on a data set that was obtained with a different staining procedure, wherein the simulation indicates the presence, grading or absence of a disease.

**Figure 1**

**Figure 2**

**Figure 3**

**Figure 4**

**Figure 5**

**Figure 6**

**Figure 7**

**Figure 8**

**Figure 9**

Figure 10

Figure 11

**Figure 12**

$t = 0\,\mathrm{s}$

$t = 25\,\mathrm{s}$

$t = 50\,\mathrm{s}$

$t = 100\,\mathrm{s}$

**Figure 13**

**Figure 14**

**Figure 15**

**Figure 16**

Figure 17

| Step 1 | Step 2 | Step 3 |
|---|---|---|
| notation of the parameters | scanning of the slide | creation of the FE-mesh |

| Step 6 | Step 5 | Step 4 |
|---|---|---|
| projection of the results | simulation | determination of $I_R$ , $I_G$ , $I_B$ |

$\dot{c}_f = \ldots \qquad I_i = \ldots$

$\dot{c}_b = \ldots$

$I_R$
$I_G$
$I_B$

**Figure 18**

real

$t = 13\,\mathrm{s}$

simulation

$t = 13\mathrm{s}$

$t = 25\,\mathrm{s}$

$t = 25\mathrm{s}$

$t = 50\,\mathrm{s}$

$t = 50\,\mathrm{s}$

$t = 100\,\mathrm{s}$

$t = 100\,\mathrm{s}$

$t = 200\,\mathrm{s}$

$t = 200\,\mathrm{s}$

**Figure 19**

(a) 13 s

(b) 13 s

(c) 13 s

(d) 13 s

(e) 25 s

(f) 25 s

(g) 25 s

(h) 25 s

(i) 50 s

(j) 50 s

(k) 50 s

(l) 50 s

(m) 100 s

(n) 100 s

(o) 100 s

(p) 100 s

(q) 200 s

(r) 200 s

(s) 200 s

(t) 200 s

**Figure 20**

(a) Course of the unbound concentration $c_f$.

(b) Course of the bound concentration $c_b$.

Europäisches
Patentamt

European
Patent Office

Office européen
des brevets

# EUROPEAN SEARCH REPORT

Application Number

EP 21 20 6627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/003194 A1 (TECH INNOVATION MOMENTUM FUND ISRAEL LIMITED PARTNERSHIP [IL]) 2 January 2020 (2020-01-02) * abstract * * figure 1 * * page 5, line 14 – page 9, line 8 * * page 12, line 5 – page 17, line 22 * ----- | 1-15 | INV. G06T7/00 G06T11/00 |
| X | CN 109 061 131 A (GENOWIS BEIJING GENE TECH CO LTD) 21 December 2018 (2018-12-21) * paragraph [0012] – paragraph [0048] * ----- | 1,14 | |
| X | CN 108 804 878 B (GENOME WISDOM INC) 11 August 2020 (2020-08-11) * paragraph [0002] – paragraph [0060] * ----- | 1,14 | |
| A | WO 2017/212055 A1 (F HOFFMANN-LA ROCHE AG [CH]; HOFFMANN-LA ROCHE INC [US]) 14 December 2017 (2017-12-14) * the whole document * ----- | 1-15 | |
| A | WINZEK C. ET AL: "An improved method to investigate staining kinetics in single cells", HISTOCHEMISTRY., vol. 86, no. 4, 1 January 1987 (1987-01-01), pages 421-426, XP055917172, DE ISSN: 0301-5564, DOI: 10.1007/BF00495004 Retrieved from the Internet: URL:http://link.springer.com/article/10.1007/BF00495004/fulltext.html> * the whole document * ----- | 1-15 | TECHNICAL FIELDS SEARCHED (IPC) G06T |

-/--

The present search report has been drawn up for all claims

| Place of search | Date of completion of the search | Examiner |
|---|---|---|
| Munich | 3 May 2022 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 21 20 6627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WINZEK C. ET AL: "Staining kinetics in single cells : Part II. Diffusion processes inside the cell", HISTOCHEMISTRY., vol. 90, no. 1, 1 January 1988 (1988-01-01), pages 79-83, XP055917175, DE ISSN: 0301-5564, DOI: 10.1007/BF00495711 Retrieved from the Internet: URL:http://link.springer.com/article/10.1007/BF00495711/fulltext.html> * the whole document * ----- | 1-15 | |

**TECHNICAL FIELDS SEARCHED (IPC)**

The present search report has been drawn up for all claims

| Place of search | Date of completion of the search | Examiner |
|---|---|---|
| Munich | 3 May 2022 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 21 20 6627

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2022

| Patent document cited in search report | | Publication date | Patent family member(s) | | Publication date |
|---|---|---|---|---|---|
| WO 2020003194 | A1 | 02-01-2020 | EP | 3811331 A1 | 28-04-2021 |
| | | | US | 2021158521 A1 | 27-05-2021 |
| | | | WO | 2020003194 A1 | 02-01-2020 |
| CN 109061131 | A | 21-12-2018 | NONE | | |
| CN 108804878 | B | 11-08-2020 | NONE | | |
| WO 2017212055 | A1 | 14-12-2017 | CN | 109313798 A | 05-02-2019 |
| | | | EP | 3469548 A1 | 17-04-2019 |
| | | | JP | 6755975 B2 | 16-09-2020 |
| | | | JP | 2019530847 A | 24-10-2019 |
| | | | US | 2020327657 A1 | 15-10-2020 |
| | | | WO | 2017212055 A1 | 14-12-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOLLON et al.** *Nature Medicine,* January 2020
- **ORRINGER et al.** *Nature Biomedical engineering,* February 2017
- **PICHAT et al.** *Med Image Anal,* May 2018
- *Leading causes of death in Europe: fact sheet,* 16 February 2021, https: //www. euro.who.int/en/ data-and-evidence/european-health-report/european-health-report-2012/ fact-sheets/fact-sheet-leading-causes-of-death-in-europe
- **AIGNER, K. R. ; STEPHENS, F. O.** Oncology basic knowledge. Springer-Verlag, 2016
- **JONES, T. L. ; BYRNES, T. J. ; YANG, G. ; HOWE, F. A. ; BELL, B. A. ; BARRICK, T. R.** Brain tumor classification using the diffusion tensor image segmentation (D-SEG) technique. *Neuro-oncology,* 2015, vol. 17 (3), 466-476
- **FALK, M. ; YNNERMAN, A. ; TREANOR, D. ; LUNDSTROM, C.** Interactive visualization of 3D histopathology in native resolution. *IEEE transactions on visualization and computer graphics,* 2018, vol. 25 (1), 1008-1017
- **VEUTHEY, T. ; HERRERA, G. ; DODERO, V. I.** Dyes and stains: From molecular structure to histological application. *Frontiers in Bioscience,* 2014, vol. 19 (1), 91-112
- **HIDDEMANN, W. ; BARTRAM, C. R.** Oncology. Springer-Verlag, 2010
- **GIULIANO, A. E. et al.** Axillary dissection vs no axillary dissection in women with invasive breast cancer and sentinel node metastasis: A randomized clinical trial. *Jama,* 2011, vol. 305 (6), 569-575
- Automatic brain tumor detection and segmentation using U-Net based fully convolutional networks. **DONG, H. ; YANG, G. ; LIU, F. ; MO, Y. ; GUO, Y.** annual conference on medical image understanding and analysis. Springer, 2017, 506-517
- **LANG, G.** Histotechnik: Praxislehrbuch für die biomedizinische Analytik. Springer-Verlag, 2006
- **BANCROFT, J. D. ; GAMBLE, M.** Theory and practice of histological techniques. Elsevier health sciences, 2019
- **MULISCH, M. ; WELSCH, U.** Romeis-Mikroskopische Technik. Springer-Verlag, 2010
- **GIBBS, S. L. et al.** Near-infrared fluorescent digital pathology for the automation of disease diagnosis and biomarker assessment. *Molecular imaging,* 2015, vol. 14 (5

- **WINZEK, C ; BAUMGARTEL, H.** Staining kinetics in single cells. Part II. Diffusion processes inside the cell. *Histochemistry,* 1988, vol. 90 (1), 79-83
- **SIEDEL, I ; ZIMMERMANN, H.** Relaxation technique for kinetic measurements of dye accumulation at the mitochondria of HeLa cells in situ. *Journal of Photochemistry and Photobiology B: Biology,* 1995, vol. 27 (3), 233-242
- **SCHIEBLER, T. H. ; KORF, H.-W.** Anatomy: histology, developmental history, macroscopic and microscopic anatomy, topography. Springer-Verlag, 2007
- **WELSCH, U.** Textbook Histology. Cytology, histology, microscopic anatomy. Elsevier GmbH, 2003
- **LINß, W. ; FANGHANEL, J.** Histology: cytology, general histology, microscopic - anatomy. Walter de Gruyter, 1999
- **SADAVA, D. ; HILLIS, D. M. ; HELLER, H. C. ; HACKER, S. D.** Purves Biology. Springer-Verlag, 2019
- **BUSELMAIER, W.** Biology for Physicians. Springer, 2012
- **HARTMANN, M. ; PABST, M. A. ; SCHMIED, R. ; CALUBA, H.-C. ; DOHR, G.** Cytology, Histology and Microscopic Anatomy. Facultas Verlags- und Buchhandels AG, 2005, vol. 3
- **MASUHR, K. F. ; NEUMANN, M.** Dual series-neurology. Thieme Verlag, 2007
- **BEJNORDI, B. E. ; LITJENS, G. ; TIMOFEEVA, N. ; OTTE-HÖLLER, I. ; HOMEYER, A. ; KARSSEMEIJER, N. ; LAAK, J. A. VAN DER.** Stain specific standardization of whole-slide histopathological images. *IEEE transactions on medical imaging,* 2015, vol. 35 (2), 404-415
- **SHARMA, K. ; KAUR, A. ; GUJRAL, S.** Brain tumor detection based on machi-ne learning algorithms. *International Journal of Computer Applications,* 2014, vol. 103 (1), 7-11
- **ARI, A. ; HANBAY, D.** Deep learning based brain tumor classification and detection system. *Turkish Journal of Electrical Engineering & Computer Sciences,* 2018, vol. 26 (5), 2275-2286
- **KATHER, J. N. et al.** Deep learning can predict microsatellite instability directly from histology in gastrointestinal cancer. *Nature medicine,* 2019, vol. 25 (7), 1054-1056

- **TAYLOR-KING, J. P. ; BARATCHART, E. ; DHAWAN, A. ; COKER, E. A. ; RYE, I. H. ; RUSSNES, H. ; CHAPMAN, S. J. ; BASANTA, D. ; MARUSYK, A.** Simulated ablation for detection of cells impacting paracrine signaling in histology analysis. *Mathematical medicine and biology: a journal of the IMA,* 2019, vol. 36 (1), 93-112
- **BETTINGER, C. ; ZIMMERMANN, H.** New investigations on hematoxylin, hematein, and hematein-aluminum complexes. II. Hematein-aluminum complexes and hema-lum staining. *Histochemistry,* 1991, vol. 96 (3), 215-228
- Single stain normalization for IHC whole slide images. **CEA, M. V. S. DE ; NIE, Y.** Medical Imaging 2018: Digital Pathology. international society for optics and photonics, 2018, vol. 10581, 1058104
- **EBERLIN, L. S. ; LIU, X. ; FERREIRA, C. R. ; SANTAGATA, S. ; AGAR, N. Y. ; COOKS, R. G.** Desorption electrospray ionization then MALDI mass spectrometry imaging of lipid and protein distributions in single tissue sections. *Analytical chemistry,* 2011, vol. 83 (22), 8366-8371
- *Brochure Tissue-Tek Prisma Plus & Tissue-Tek Film (EN),* 12 February 2021, https ://www. sakura. eu / en / Solutions / Staining- Coverslipping / Tissue- Tek-Prisma- Plus- Film
- **LLEWELLYN, B.** Nuclear staining with alum hematoxylin. *Biotechnic & Histoche-mistry,* 2009, vol. 84 (4), 159-177
- **PRENTØ, P.** Staining of macromolecules: possible mechanisms and examples. *Biotechnic & Histochemistry,* 2009, vol. 84 (4), 139-158
- **PRENTØ, P.** A contribution to the theory of biological staining based on the principles for structural organization of biological macromolecules. *Biotechnic & Histochemistry,* 2001, vol. 76 (3), 137-161
- **BRUNT, E. et al.** cHCC-CCA: Consensus terminology for primary liver carcinomas with both hepatocytic and cholangiocytic differentiation. *Hepatology,* 2018, vol. 68 (1), 113-126
- **COX, C. E. et al.** Guidelines for sentinel node biopsy and lymphatic mapping of patients with breast cancer.... *Annals of surgery,* 1998, vol. 227 (5), 645
- **REGEV, A. ; BERHO, M. ; JEFFERS, L. J. ; MILIKOWSKI, C. ; MOLINA, E. G. ; PYRSO-POULOS, N. T. ; FENG, Z.-Z. ; REDDY, K. R. ; SCHIFF, E. R.** Sampling error and intraobserver variation in liver biopsy in patients with chronic HCV infection. *The American journal of gastroenterology,* 2002, vol. 97 (10), 2614-2618
- **LI, Z. ; GU, X. ; LOU, S. ; ZHENG, Y.** The development of binary Mg-Ca alloys for use as biodegradable materials within bone. *Biomaterials,* 2008, vol. 29 (10), 1329-1344
- *109249 Mayers hemalum solution for microscopy,* 12 February 2021, https://www.merckmillipore. com/EN/product/Mayers-hemalum-     solution, MDA_CHEM- 109249
- **GOLDSTEIN, D.** A microdensitometric method for the analysis of staining kinetics. *Journal of microscopy,* 1980, vol. 119 (3), 331-343
- **HOLLON, T. C. et al.** Near real-time intraoperative brain tumor diagnosis using stimulated Raman histology and deep neural networks. *Nature medicine,* 2020, vol. 26 (1), 52-58
- **ORRINGER, D. A. et al.** Rapid intraoperative histology of unprocessed surgical specimens via fiber-laser-based stimulated Raman scattering microscopy. *Nature biomedical engineering,* 2017, vol. 1 (2), 0027
- **IRION, G ; OCHSENFELD, L ; NAUJOK, A ; ZIMMERMANN, H.** The concentration jump method. *Histochemistry,* 1993, vol. 99 (1), 75-83
- **WINZEK, C ; PLIENINGER, P ; BAUMGARTEL, H.** An improved method to investi-gate staining kinetics in single cells. *Histochemistry,* 1987, vol. 86 (4), 421-426
- Modeling of the batch dyeing process. **REDDY, M. ; LEE, G. ; MCGREGOR, R. ; JASPER, W.** Proceedings of 1995 American Control Conference-ACC'95. IEEE, 1995, vol. 3, 2180-2184
- **SOUZA, S. M. G. U. DE ; SOUZA, D. P. DE ; SILVA, E. A. B. DA ; SOUZA, A. A. U. DE.** Modelling of the dyeing process of packed cotton threads using reactive dyes. *Transport in porous media,* 2007, vol. 68 (3), 341-363
- **LIN, S.** Concentration-dependent diffusion of dye in reactive dyeing systems. *Journal of applied polymer science,* 1992, vol. 44 (10), 1743-1749
- **GOLDSTEIN, D.** An approach to the thermodynamics of histological dyeing, illustrated by experiments with azure A. *Journal of Cell Science,* 1963, vol. 3 (68), 413-439
- **ALTENBACH, H.** Continuum mechanics. Springer-Verlag, 2018, vol. 4
- Modeling and simulation of hydrogels and hydrogel-based layered systems. **SOBCZYK, M.** Diss. Dresden University of Technology, 2018
- **NICHOLSON, C.** Diffusion and related transport mechanisms in brain tissue. *Reports on Progress in Physics,* 2001, vol. 64, 815-884
- **MÜNSTER, A. F.** Simulation of stationary chemical patterns and waves in ionic reactions. *Discrete & Continuous Dynamical Systems-B,* 2002, vol. 2 (1), 35-46
- **PARKE, W. C.** Biophysics. Springer, 2020
- **CRANK, J.** The mathematics of diffusion. Oxford university press, 1979

- **PARK, J. W. ; NA, S. C. ; LEE, Y. ; LEE, S. ; PARK, S. B. ; JEON, N. L.** Measurement of lipid droplet accumulation kinetics in Chlamydomonas reinhardtii using seoul-fluor. *Energies,* 2013, vol. 6 (11), 5703-5716
- **JAIN, R. K.** Transport of molecules in the tumor interstitium: A review. *Cancer research,* 1987, vol. 47 (12), 3039-3051
- Control of the adsorption of dyes on cotton. **FERUS-COMELO, M.** Diss. University of Leeds, 2002
- **HAMANN, C. H. ; HOOGESTRAAT, D. ; KOCH, R.** Grundlagen Der Kinetik. Springer, 2017
- **LECHNER, M. D.** Introduction to The Kinetics. Springer, 2018
- **KIM, J. ; WHITE, K. S. ; WINFREE, E.** Construction of an in vitro bistable circuit from synthetic transcriptional switches. *Molecular systems biology,* 2006, vol. 2 (1), 68-79
- **TARTAKOVSKY, D. M. ; DENTZ, M.** Diffusion in porous media: Phenomena and Mechanisms. *Transport in Porous Media,* 2019, vol. 130 (1), 105-127
- **VENDEL, E. ; ROTTSCHAFER, V. ; LANGE, E. C. DE.** Improving the prediction of local drug distribution profiles in the brain with a new 2D mathematical model. *Bulletin of mathematical biology,* 2019, vol. 81 (9), 3477-3507
- **FIBICH, G ; HAMMER, A ; GANNOT, G ; GANDJBAKHCHE, A ; GANNOT, I.** Mode-ling and simulations of the pharmacokinetics of fluorophore conjugated antibodies in tumor vicinity for the optimization of fluorescence-based optical imaging. *Lasers in Surgery and Medicine: The Official Journal of the American Society for Laser Medi-cine and Surgery,* 2005, vol. 37 (2), 155-160
- **TAKAMATSU, H. ; RUBINSKY, B.** Viability of deformed cells. *Cryobiology,* 1999, vol. 39 (3), 243-251
- Modeling and simulation of the behavior of flow-through switchable membranes. **EHRENHOFER, A.** Diss. Technische Universität Dresden, 2018
- **SYKOVÁ, E. ; NICHOLSON, C.** Diffusion in brain extracellular space. *Physiological reviews,* 2008, vol. 88 (4), 1277-1340
- **RUIFROK, A. C. ; JOHNSTON, D. A. et al.** Quantification of histochemical staining by color deconvolution. *Analytical and quantitative cytology and histology,* 2001, vol. 23 (4), 291-299
- **GAVRILOVIC, M. ; AZAR, J. C. ; LINDBLAD, J. ; WAHLBY, C. ; BENGTSSON, E. ; BUSCH, C. ; CARLBOM, I. B.** Blind color decomposition of histological images. *IEEE tran-sactions on medical imaging,* 2013, vol. 32 (6), 983-994
- Photometry: Colorimeter and spectrophotometer. **KUMAR, V. ; GILL, K. D.** Ba-sic concepts in clinical biochemistry: a practical guide. Springer, 2018, 17-20
- **LAAK, J. A. VAN DER ; PAHLPLATZ, M. M. ; HANSELAAR, A. G. ; WILDE, P. C. DE.** Hue-satu-ration-density (HSD) model for stain recognition in digital images from transmitted light microscopy. *Cytometry: The Journal of the International Society for Analytical Cytology,* 2000, vol. 39 (4), 275-284
- **BETTINGER, C. ; ZIMMERMANN, H.** New investigations on hematoxylin, hematein, and hematein-aluminum complexes. I. Spectroscopic and physico-chemical properties of hematoxylin and hematein. *Histochemistry,* 1991, vol. 95 (3), 279-288
- **GRESSNER, A. M. ; ARNDT, T.** Encyclopedia of medical laboratory diagnostics¬. Springer-Verlag, 2019
- **HARTEN, U.** Physics for physicians: an introduction. Springer-Verlag, 2006
- **MAYERHÖFER, T. G. ; POPP, J.** Beer's Law-Why Absorbance Depends (Almost) Linearly on Concentration. *ChemPhysChem,* 2019, vol. 20 (4), 511-515
- **ALNÆS, M. S. et al.** The FEniCS Project Version 1.5. *Archives of Numerical Software,* 2015, vol. 3 (100), 9-23
- **ZIENKIEWICZ, O. C. ; TAYLOR, R. L. ; ZHU, J. Z.** The Finite Element Method: Its basis and fundamentals. Elsevier, 2005
- **LANGTANGEN, H. P. ; LOGG, A. ; TVEITO, A.** Solving PDEs in Python: The FE-niCS Tutorial. Springer International Publishing, 2016, vol. I
- Prometheus Learning Atlas of Anatomy¬. **SCHÜNKE, M. ; SCHULTE, E. ; SCHUMACHER, U.** Head and neuroanatomy. Georg Thieme Verlag KG, 2006
- **DAPSON, R.** Dye-tissue interactions: mechanisms, quantification and bonding parameters for dyes used in biological staining. *Biotechnic & Histochemistry,* 2005, vol. 80 (2), 49-72
- **HAKUMÄKI, J. M. ; POPTANI, H. ; PUUMALAINEN, A.-M. ; LOIMAS, S. ; PALJARVI, L. A. ; YLA-HERTTUALA, S. ; KAUPPINEN, R. A.** Quantitative 1H nuclear ma-gnetic resonance diffusion spectroscopy of BT4C rat glioma during thymidine kinase-mediated gene therapy in vivo: identification of apoptotic response. *Cancer research,* 1998, vol. 58 (17), 3791-3799
- **IUPAC, I.** *Compendium of chemical terminology,* 1997
- Hematoxylin, C.I. 75290 For Microscopical Staining Safety Data Sheet. *LABKEM*
- Hematein (C.I. 75290) for microscopy. *SAFETY DA-TA SHEET according to Regulation (EC) No. 1907/2006*
- **GMBH, S. L.** Hematoxilin, acidic according to Mayer. *EU SAFETY DATA SHEET*

- *Hematoxylin,* 30 December 2020, https : / / www . chemicalbook . com/ ChemicalProductProperty_ EN_ CB1382426.htm
- **BOCKLER, F. et al.** *ROMPP (Online) Alum, RD-01-01290,* 21 March 2021, https://ro-empp.thieme. de/lexicon/RD-01-01290
- **FUSHIMI, K. ; VERKMAN, A.** Low viscosity in the aqueous domain of cell cytoplasm measured by picosecond polarization microfluorimetry. *The Journal of cell biology,* 1991, vol. 112 (4), 719-725
- **LANG, I. ; SCHOLZ, M. ; PETERS, R.** Molecular mobility and nucleocytoplasmic flux in hepatoma cells.... *The Journal of cell biology,* 1986, vol. 102 (4), 1183-1190
- **ROGERS, S. S. ; WAIGH, T. A. ; LU, J. R.** Intracellular microrheology of motile Amoeba proteus. *Biophysical journal,* 2008, vol. 94 (8), 3313-3322
- **KAO, H. P. ; ABNEY, J. R. ; VERKMAN, A.** Determinants of the translational mobility of a small solute in cell cytoplasm.... *The Journal of cell biology,* 1993, vol. 120 (1), 175-184
- **BICKNESE, S ; PERIASAMY, N ; SHOHET, S ; VERKMAN, A.** Cytoplasmic viscosity near the cell plasma membrane: measurement by evanescent field frequency-domain microfluorimetry. *Biophysical journal,* 1993, vol. 65 (3), 1272-1282
- **ZIDOVSKA, A.** The rich inner life of the cell nucleus: dynamic organization, active flows, and emergent rheology. *Biophysical Reviews,* 2020, 1-14
- **CARAGINE, C. M. ; HALEY, S. C. ; ZIDOVSKA, A.** Surface fluctuations and coalescence of nucleolar droplets in the human cell nucleus. *Physical review letters,* 2018, vol. 121 (14), 148101
- **TSENG, Y. ; LEE, J. S. ; KOLE, T. P. ; JIANG, I. ; WIRTZ, D.** Micro-organization and visco-elasticity of the interphase nucleus revealed by particle nanotracking. *Journal of cell science,* 2004, vol. 117 (10), 2159-2167
- **BAEHR, H. D. ; STEPHAN, K.** Heat and Mass Transfer. Springer Vieweg, 2019, vol. 10
- **RASSOW, J. ; HAUSER, K. ; NETZKER, R. ; DEUTZMANN, R.** Duale Reihe Biochemie¬. Thieme, 2012, vol. 3
- **GEUZAINE, C. ; REMACLE, J.-F.** Gmsh: A 3-D finite element mesh generator with built-in pre-and post-processing facilities. *International journal for numerical methods in engineering,* 2009, vol. 79 (11), 1309-1331
- **SCHINDELIN, J. et al.** Fiji: an open-source platform for biological-image analysis. *Nature methods,* 2012, vol. 9 (7), 676-682
- **ARGANDA-CARRERAS, I. ; KAYNIG, V. ; RUEDEN, C. ; ELICEIRI, K. W. ; CHINDE-LIN, J. ; CARDONA, A. ; SEBASTIAN SEUNG, H.** Trainable Weka Segmentation: a machine learning tool for microscopy pixel classification. *Bioinformatics,* 2017, vol. 33 (15), 2424-2426
- **KROON, D.-J.** *Isocontour,* 02 February 2021, https://www.mathworks.com/matlabcentral/fileexchange/ 30525-isocontour
- **MARTIN, H.** Numerical flow simulation in hydrodynamics: fundamentals and methods. Springer-Verlag, 2011
- **MOLLS, M. ; ANSCHER, M.S. ; NIEDER, C. ; VAUPEL, P.** The impact of tumor biology on cancer treatment and multidisciplinary strategies. Springer, 2009
- **WITTENBORN, T. R. ; NIELSEN, T. ; THOMSEN, J. S. ; HORSMAN, M. R. ; NY-GAARD, J. V.** Simulation of heterogeneous molecular delivery in tumors using $\mu$CT reconstructions and MRI validation. *Microvascular Research,* 2016, vol. 108, 69-74
- **JANSEN, I. ; LUCAS, M. ; SAVCI-HEIJINK, C. D. ; MEIJER, S. L. ; LIEM, E. I. ; BOER, O. J. DE ; LEEUWEN, T. G. VAN ; MARQUERING, H. A. ; BRUIN, D. M. DE.** Three-dimensional histopathological reconstruction of bladder tumors. *Diagnostic pathology,* 2019, vol. 14 (1), 1-7
- **ZHANG, F. et al.** Controlling adsorption structure of eosin Y dye on nanocrystalline TiO2 films for improved photovoltaic performances. *The Journal of Physical Che-mistry C,* 2013, vol. 117 (28), 14659-14666
- Paraview: An end-user tool for large data visualization. **AHRENS, J. ; GEVECI, B. ; LAW, C.** The visualization handbook. 2005, vol. 717